(19) Europäisches Patentamt / European Patent Office / Office européen des brevets

(11) **EP 4 682 765 A1**

(12) **EUROPEAN PATENT APPLICATION**
published in accordance with Art. 153(4) EPC

(43) Date of publication:
 **21.01.2026 Bulletin 2026/04**

(21) Application number: **24865640.7**

(22) Date of filing: **02.07.2024**

(51) International Patent Classification (IPC):
 **G06N 3/048** (2023.01)     **G06F 7/556** (2006.01)

(52) Cooperative Patent Classification (CPC):
 **G06F 17/10; G06F 7/556; G06F 17/17; G06N 3/048**

(86) International application number:
 **PCT/KR2024/009315**

(87) International publication number:
 **WO 2025/058197 (20.03.2025 Gazette 2025/12)**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **GE KH MA MD TN**

(30) Priority: **12.09.2023 KR 20230121383**

(71) Applicant: **SAMSUNG ELECTRONICS CO., LTD.**
 **Yeongtong-gu**
 **Suwon-si, Gyeonggi-do 16677 (KR)**

(72) Inventors:
 • **LEE, Jonghun**
  **Suwon-si, Gyeonggi-do 16677 (KR)**
 • **PARK, Chulsoo**
  **Suwon-si, Gyeonggi-do 16677 (KR)**
 • **KIM, Daesung**
  **Suwon-si, Gyeonggi-do 16677 (KR)**
 • **JEON, Yongkweon**
  **Suwon-si, Gyeonggi-do 16677 (KR)**
 • **CHO, Hanjoo**
  **Suwon-si, Gyeonggi-do 16677 (KR)**

(74) Representative: **Gulde & Partner**
 **Patent- und Rechtsanwaltskanzlei mbB**
 **Berliner Freiheit 2**
 **10785 Berlin (DE)**

(54) **PROCESSOR FOR PROCESSING SOFTMAX FUNCTION AND OPERATION METHOD OF PROCESSOR**

(57) Provided are a processor including an accelerator for processing a softmax function and an operating method of the processor. The method comprising obtaining, by an exponential function processing module, input data comprising a plurality of input values; obtaining, by the exponential function processing module, a value of an exponential function corresponding to an input value included in the input data using a look-up table (LUT) module; determining, by the exponential function processing module, a scale factor corresponding to the input value; and determining, by a softmax function processing module, a value of a softmax function corresponding to the input value based on the value of the exponential function and the scale factor is provided.

FIG. 1

**Description**

TECHNICAL FIELD

The disclosure relates to a processor and an operating method thereof. More specifically, the disclosure relates to a processor for processing artificial intelligence (AI) operations and an operating method of the processor.

BACKGROUND ART

Electronic devices, such as televisions (TVs), mobile terminals, or home appliances, may include a processor for processing or implementing artificial intelligence (AI). A processor for implementing AI may refer to a processor provided separately from a central processing unit (CPU) in order to increase the processing speed of AI operations including a neural network (NN). A processor for processing AI operations may include a graphics processing unit (GPU) or a neural processing unit (NPU).

AI operations processed by processors may include deep learning neural network operations. Deep learning neural networks may include convolution operations, product operations between matrices (or between a matrix and a vector), and operations on non-linear activation functions. Unlike servers with sufficient computing power, electronic devices may not have sufficient computing power for AI processing. Depending on the processing efficiency for each operation included in AI, there may be significant performance differences for on-device AI processes (e.g., inference using AI technology) of electronic devices.

Non-linear activation functions may include a sigmoid function, a hyperbolic tangent function, a rectified linear unit (ReLU) function, an exponential linear unit (ELU) function, a Gaussian error linear unit (GELU) function, and a softmax function.

Because a softmax function, which is one of the nonlinear activation functions, includes an exponential function operation and a division operation, the complexity for processing the softmax function is high. A processor for processing an artificial neural network (or an AI operation) may use a separate processor to process a softmax function. However, when a separate processor is used to process the softmax function, the time and resources are consumed by data transmission. Therefore, there is a need for a method by which a processor for processing an artificial neural network (or an AI operation) processes a softmax function.

DISCLOSURE OF INVENTION

SOLUTION TO PROBLEM

According to an embodiment of the disclosure, method performed by at least one processor configured to implement an accelerator for processing a softmax function is provided. The method may include obtaining, by an exponential function processing module, input data comprising a plurality of input values. The method may include obtaining, by the exponential function processing module, a value of an exponential function corresponding to an input value included in the input data using a look-up table module. The method may include determining, by the exponential function processing module, a scale factor corresponding to the input value. The method may include determining, by a softmax function processing module, a value of a softmax function corresponding to the input value based on the value of the exponential function and the scale factor. Values associated with a plurality of exponential functions may be stored in the LUT module. The values associated with the plurality of exponential functions may be classified into a plurality of groups according to scale factors corresponding to the values.

According to an embodiment of the disclosure, a processor for processing a softmax function is provided. The processor may include an accelerator. The accelerator may include an exponential function processing module and a softmax function processing module. The exponential function processing module may be configured to obtain input data comprising a plurality of input values. The exponential function processing module may be configured to obtain a value of an exponential function corresponding to an input value included in the input data using a look-up table (LUT) module. The exponential function processing module may be configured to determine a scale factor corresponding to the input value. The softmax function processing module may be configured to determine a value of a softmax function corresponding to the input value based on the value of the exponential function and the scale factor. Values associated with a plurality of exponential functions may be stored in the LUT module. The values associated with the plurality of exponential functions may be classified into a plurality of groups according to scale factors corresponding to the values.

According to an embodiment of the disclosure, an electronic device is provided. The electronic device may include a first processor configured to process a softmax function, a second processor, and a memory. The second processor may be configured to execute instructions included in the memory to control the first processor to process an artificial intelligence (AI) operation comprising the softmax function. The first processor may include an accelerator. The accelerator may be configured to implement an exponential function processing module and a softmax function processing module. The exponential function processing module may be configured to obtain input data including a plurality of input values. The exponential function processing module may be configured to obtain a value of an exponential function corresponding to an input value included in the input data using a look-up table (LUT) module. The exponential function processing module may be configured to determine a scale factor corresponding to the input value. The softmax function processing module may be configured to determine a value of a softmax function corresponding to the input value based on the value of the exponential function and the scale factor. Values associated with a plurality of exponential functions may be stored in the LUT module. The values associated with the plurality of exponential functions may be classified into a plurality of groups according to scale factors corresponding to the values.

BRIEF DESCRIPTION OF DRAWINGS

FIG. 1 is a block diagram illustrating a processor for processing an artificial neural network (or an artificial intelligence (AI) operation), according to an embodiment of the disclosure.

FIG. 2 is a block diagram illustrating a processor for processing an artificial neural network (or an AI operation), according to an embodiment of the disclosure.

FIG. 3 is a flowchart of an operating method of a processor including an accelerator for processing a softmax function, according to an embodiment of the disclosure.

FIG. 4A is a diagram illustrating quantization of an input value, according to an embodiment of the disclosure.

FIG. 4B is a diagram illustrating quantization of a value of an exponential function, according to an embodiment of the disclosure.

FIG. 4C is a diagram illustrating quantization of an input value and a value of an exponential function, according to an embodiment of the disclosure.

FIG. 5A is a diagram illustrating scale factors and groups of data stored in a lookup table (LUT) module, according to an embodiment of the disclosure.

FIG. 5B is a diagram illustrating scale factors and groups of data stored in a lookup table (LUT) module, according to an embodiment of the disclosure.

FIG. 6 is a block diagram illustrating an operation of an exponential function processing module according to an embodiment of the disclosure.

FIG. 7A is a flowchart of a method by which a processor including an accelerator determines a value of a softmax function, according to an embodiment of the disclosure.

FIG. 7B is a flowchart of a method by which a processor including an accelerator determines the sum of exponential functions, according to an embodiment of the disclosure.

FIG. 8A is a flowchart of a method by which a processor including an accelerator determines a value of a softmax function using a parameter, according to an embodiment of the disclosure.

FIG. 8B is a flowchart of an operation of a parameter module of an accelerator, according to an embodiment of the disclosure.

FIG. 8C is a flowchart of a method by which a processor including an accelerator determines a value of a softmax function, according to an embodiment of the disclosure.

FIG. 9 is a flowchart of an operation in which a processor including an accelerator initializes settings, according to an embodiment of the disclosure.

FIG. 10 is a block diagram illustrating an operation of a processor including an accelerator, according to an embodiment of the disclosure.

FIG. 11 is a flowchart of the operating method of the processor according to the input data, according to an embodiment of the disclosure.

FIG. 12A is a diagram illustrating a process in which the processor performs an AI operation, according to an embodiment of the disclosure.

FIG. 12B is a diagram illustrating a process in which the processor performs an AI operation, according to an embodiment of the disclosure.

FIG. 13 is a block diagram illustrating an electronic device according to an embodiment of the disclosure.

FIG. 14 is a diagram illustrating an electronic device including a processor, according to an embodiment of the disclosure.

MODE FOR THE INVENTION

Throughout the disclosure, the expression "at least one of a, b or c" may indicate only a, only b, only c, both a and b, both a and c, both b and c, all of a, b, and c, or variations thereof.

As for the terms as used in the disclosure, common terms that are currently widely used are selected as much as possible while taking into account the functions in the disclosure. However, the terms may vary depending on the intention of those of ordinary skill in the art, precedents, the emergence of new technology, and the like. Also, in specific cases, there are also terms arbitrarily selected by the applicant. In this case, the meaning of the terms will be understood through the corresponding explanation parts. Therefore, the terms as used herein should be defined based on the meaning of the terms and the description throughout the disclosure rather than simply the names of the terms.

The singular forms as used herein are intended to include the plural forms as well unless the context clearly indicates otherwise. It will be understood that although the terms "first," "second," etc. may be used to describe various elements, these elements should not be limited by these terms. These terms are only used to distinguish one element from another.

Throughout the disclosure, the expression "a portion includes a certain element" may mean that the portion further includes other elements rather than excludes other elements unless otherwise stated. In the disclosure, the term such as "unit" and "module" may refer to a unit that processes or is configured to process at least one function or operation.

The expression "configured to" as used herein may be used interchangeably with, for example, "suitable for," "having the capacity to," "designed to," "adapted to," "made to," or "capable of" depending on a situation. The term "configured to" may not necessarily mean only "specifically designed to" in hardware. In some situations, the expression "a system configured to" may mean that the system is "capable of ..." with other devices or components. The expression "a module performs ..." as used herein may be used interchangeably with "a module is configured to perform ..." depending on a situation.

When one element is referred to as being "connected" or "coupled" to another element, this may mean that the one element may be directly connected or coupled to the other element, but it will be understood that the elements may be connected or coupled to each other via an intervening element therebetween unless otherwise stated.

The expression "a module transmits or transfers data" as used herein may mean that the module provides data to another module. A module may be connected to another module by wire or wirelessly. A module may provide data directly to another module, or may provide data to another module through still another module.

In describing the disclosure, descriptions of technical contents that are well known in the technical field to which the disclosure belongs and are not directly related to the disclosure may be omitted. By omitting some description, the disclosure may be described more clearly without obscuring the gist of the disclosure. In order to clearly explain the disclosure, parts irrelevant to the description may be omitted in the drawings, and similar reference numerals are assigned to similar parts throughout the disclosure. Also, reference numerals used in the drawings are only for describing the drawings, and different reference numerals used in different drawings do not indicate different elements. The size of each element does not entirely reflect the actual size. The same reference numerals are assigned to the same or corresponding elements in the drawings.

Advantages and features of the disclosure, and methods of achieving them will be clarified with reference to embodiments described below in detail with reference to the accompanying drawings. However, the disclosure is not limited to the following embodiments and may be embodied in different various forms. Embodiments presented below are provided so that the disclosure will be thorough and complete and will fully convey the concept of the embodiments to those of ordinary skill in the art. An embodiment of the disclosure may be defined by the claims.

It will be understood that the respective blocks of the flowcharts and combinations of the flowcharts may be performed by computer program instructions. Computer program instructions may be mounted on processors of general-purpose computers, special-purpose computers, or other programmable data processing apparatuses, and the instructions to be executed using the processors of the computers or other programmable data processing apparatuses may generate modules for performing the functions described in the flowchart block(s). Because computer program instructions may also be stored in a computer-executable or computer-readable memory that may direct the computer or other programmable data processing apparatus in order to implement functions in a particular manner, the instructions stored in the computer-executable or computer-readable memory are also capable of producing an article of manufacture containing instruction modules for performing the functions described in the flowchart block(s). Computer program instructions may also be mounted on computers or other programmable data processing apparatuses.

In the disclosure, each block in the flowcharts may represent part of a module, segment, or code that includes one or more executable instructions for executing a specified logical function(s). In an embodiment of the disclosure, the functions mentioned in blocks may occur out of order. For example, two blocks illustrated in succession may in fact be executed substantially concurrently, or the blocks may sometimes be executed in a reverse order, depending on the functions involved therein.

As is traditional in the field, embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

An element ending in one of the suffixes "-er" and "-or" (which may be referred to as an "-er/or" element) as used herein may refer to a hardware element, such as a field programmable gate array (FPGA) or an application specific integrated circuit (ASIC), and the "-er/or" element may perform certain functions. The "-er/or" element may not be limited to hardware. The "-er/or" element may be configured in an addressable storage medium or may be configured to reproduce one or more processors. In an embodiment of the disclosure, the "-er/or" element may include elements, such as software elements, object-oriented software elements, class elements, and task elements, processes, functions, attributes, procedures, subroutines, segments of program code, drivers, firmware, microcodes, circuits, data, databases, data structures, tables, arrays, and variables. Functions provided through specific elements or specific "-er/or" elements may be combined to reduce the number thereof or may be separated into additional elements. In addition, in an embodiment of the disclosure, "-er/or" elements may include one or more processors.

Hereinafter, an embodiment of the disclosure will be described in detail with reference to the accompanying drawings, so that those of ordinary skill in the art may easily carry out the disclosure. However, the disclosure may be implemented in various different forms and is not limited to the embodiments described herein. Hereinafter, the disclosure is described in detail with reference to the accompanying drawings.

In the disclosure, an input module may include a module configured to obtain data for an accelerator. In the disclosure, the input module may be used interchangeably with terms such as an input queue or a data obtaining module. In an embodiment, the input module may include an input buffer or may be used interchangeably with an input buffer.

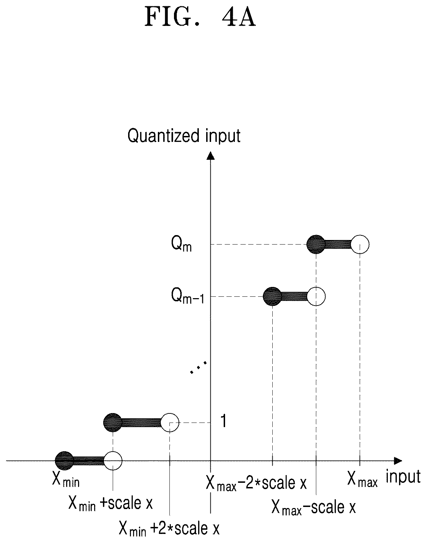

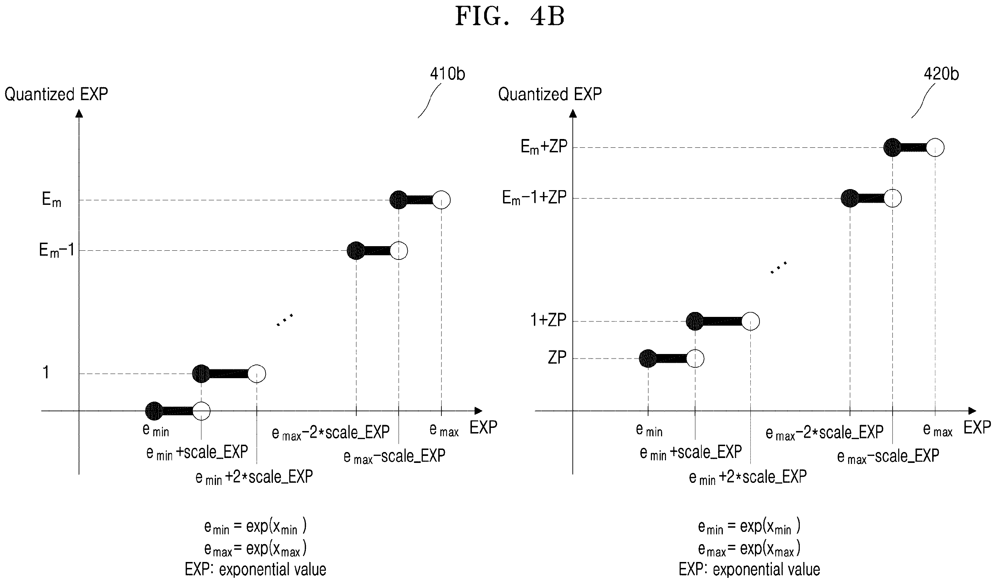

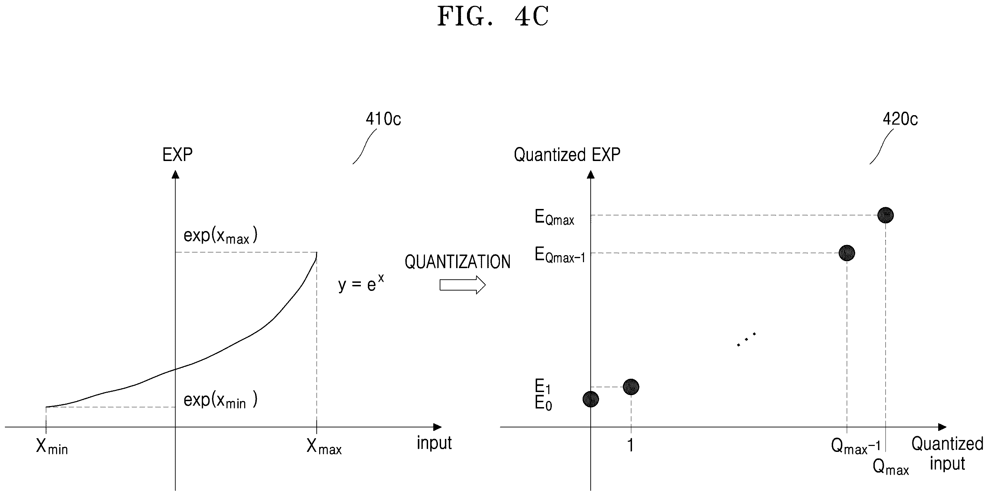

In the disclosure, quantization may include converting continuously representable data into discontinuous or discrete data. Quantization may refer to converting a value included in a certain range into a reference value. For example, quantization may refer to representing a value great than or equal to $x_0$ and less than $x_1$ as 0 and representing a value greater than or equal to $x_1$ and less than $x_2$ as 1. In the disclosure, quantization may be used interchangeably with terms such as "sampling," "discretization," or "integerization." Examples of quantized data according to an embodiment of the disclosure may be understood with reference to FIGS. 4A, 4B, and 4C.

In the disclosure, a maximum quantization value may refer to the greatest value that is representable by quantized data. For example, when data is quantized to an integer value between "0" and "255", a maximum quantization value may be "255". According to an embodiment of the disclosure, a maximum quantization value of output data of an accelerator may be equal to a maximum quantization value of input data of the accelerator, but the disclosure is not limited thereto. In the disclosure, the maximum quantization value may be used interchangeably with terms such as a "quantization upper limit," a "maximum representable value," or a "quantization range." An example of the maximum quantization value according to an embodiment of the disclosure may be understood with reference to FIGS. 4A, 4B, and 4C.

In the disclosure, a look-up table (LUT) module may include a module configured to output a value of an exponential function. The LUT module may output a value of an exponential function corresponding to an input value. In the disclosure, the LUT module may be used interchangeably with terms such as a "reference table module", a "data dictionary module", or a "data mapping module".

In the disclosure, an index value may refer to a value used to determine one among a plurality of values stored in the LUT module, which may be for example values stored in a LUT included in the LUT module. In an embodiment of the disclosure, the LUT module may store information including a plurality of index values and a value corresponding to each index value. The LUT module may obtain an index value and provide a stored value corresponding to the index value. In the disclosure, the index value may be used interchangeably with terms such as an "index," a "key," a "key value," or a "look-up key."

In the disclosure, exponential function information may include information about a quantized value of an exponential function. The exponential function information may include a value of an exponential function associated with a value that is representable by quantized input data. For example, when input data is quantized to one of integer values between "0" and "255", the exponential function information may include an integer value between "0" and "255" and a value of an exponential function corresponding to each integer value. In an embodiment of the disclosure, the value of the exponential function may be a quantized value. According to an embodiment of the disclosure, the exponential function information may include data in which a plurality of values representable by quantized input data and values of exponential functions respectively corresponding to the values are represented in a table format. Exponential function information of the disclosure may be used interchangeably with terms such as "exponential function table," "exponential function look-up table (LUT) data," "exponential function data," or "exponential value data."

In the disclosure, a shift operation may refer to an arithmetic shift operation. The shift operation may include a left shift operation or a right shift operation. The left shift operation may be represented by "<<", and the right shift operation may be represented by ">>". The left shift operation may be understood as left-shifting a binary bit of an operation target value. Left-shifting by N bits may be understood as multiplying the operation target value by $2^N$ (e.g., 2 to the $N^{th}$ power) (where N is an integer). For example, $3<<2$ may mean 12. In the disclosure, performing a left shift operation by N may mean multiplying a target value by $2^N$. The right shift operation may be understood as right-shifting a binary bit of an operation target value. Right-shifting by N bits may be understood as dividing the operation target value by $2^N$. In the disclosure, performing a right shift operation by N may mean dividing a target value by $2^N$. For example, $12>>2$ may mean 3.

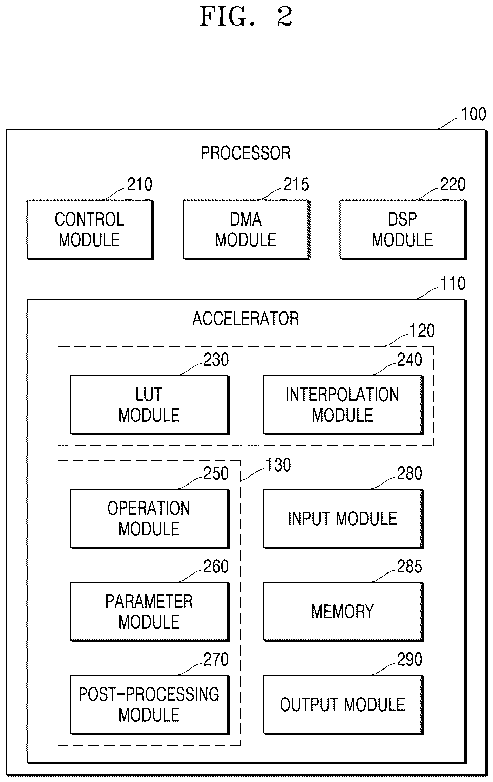

In the disclosure, a scale factor may include a scaling variable for a value of an exponential function stored in a LUT module (e.g., the LUT module 230 of FIG. 2). In an embodiment of the disclosure, the value of the exponential function stored in the LUT module may be a value scaled using the scale factor. In an embodiment of the disclosure, the value of the exponential function stored in the LUT module may be a value scaled by performing a left shift operation by the scale factor. The scale factor in the disclosure may be used interchangeably with terms such as "log scale multiple," "scale parameter," or "ratio." The scale factor in the disclosure may refer to a scale factor corresponding to an input value other than a base scale factor.

Interpolation in the disclosure may include an operation of obtaining a result value based on a plurality of reference values. In an embodiment of the disclosure, interpolation may include an operation of determining a value of an exponential function corresponding to an input value, based on a first reference value and a second reference value. In an embodiment of the disclosure, interpolation may include an operation of performing a weighted sum of a plurality of reference values using weights. In the disclosure, interpolation may be used interchangeably with terms such as "prediction," "weighted sum," or "generate."

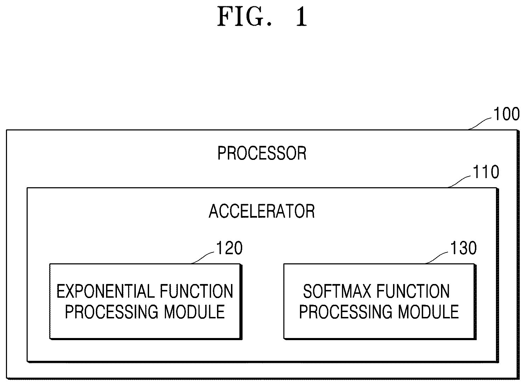

FIG. 1 is a block diagram illustrating a processor 100 for processing an artificial neural network (or an artificial intelligence (AI) operation), according to an embodiment of the disclosure.

Referring to FIG. 1, the processor 100 may include an accelerator 110. The accelerator 110 may include an exponential function processing module 120 and a softmax function processing module 130. The exponential function processing module 120 and the softmax function processing module 130 may be implemented in the accelerator 110 in the form of hardware (HW).

In an embodiment of the disclosure, the processor 100 may process an AI operation such as the softmax function. The processor 100 may process the softmax function to calculate at least one result value associated with the operation of the electronic device including the processor 100. In an embodiment of the disclosure, the processor 100 may determine the value of the softmax function for input data. The softmax function may be expressed according to Equation 1.

[Equation 1]

$$y_i = \frac{e^{x_i}}{\sum e^{x_j}}$$

The value of the softmax function for the $i^{th}$ input data is determined based on the sum of the exponents of all input data and the exponent power of the $i^{th}$ input data.

In an embodiment of the disclosure, the exponential function processing module 120 may obtain input data including a plurality of input values. The exponential function processing module 120 may sequentially obtain a plurality of input values. In an embodiment of the disclosure, the input data may be represented as, or in the form of, a vector, a matrix, or a tensor. For example, the input data may be vector-type data having a size of 1x1xD. Alternatively, for example, the input data may be matrix-type data having a size of 1xWxH, tensor-type data having a size of CxWxH, or a tensor including 4-dimension or more.

In an embodiment of the disclosure, the input value of the input data may be a quantized value. The input value may be an integer within a certain range. The input value may be an integer between "0" and the maximum quantization value. For example, when the maximum quantization value is "255", the input value may be one of the integers between "0" and "255". Examples of quantized data according to an embodiment of the disclosure are described in detail with reference to FIGS. 4A, 4B, and 4C.

In an embodiment of the disclosure, the exponential function processing module 120 may obtain the value of the exponential function, based on input data. The exponential function processing module 120 may obtain the value of the exponential function corresponding to the input value of the input data. In an embodiment of the disclosure, the exponential function processing module 120 may obtain the value of the exponential function corresponding to the input value using the LUT module. The exponential function processing module 120 may extract the value of the exponential function corresponding to the input value by referring to the LUT module. The exponential function processing module 120 may provide, to the softmax function processing module 130, the value of the exponential function corresponding to the input value.

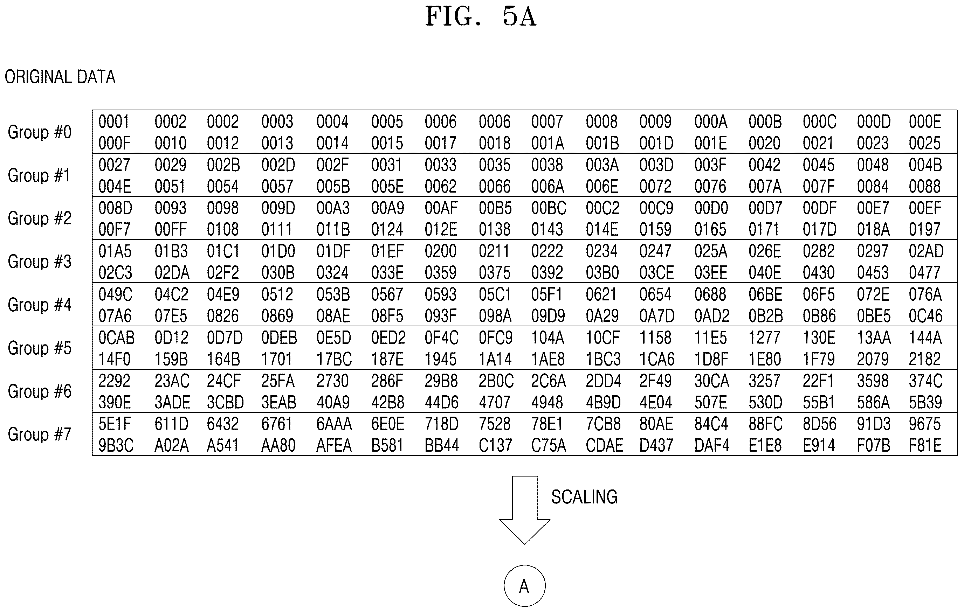

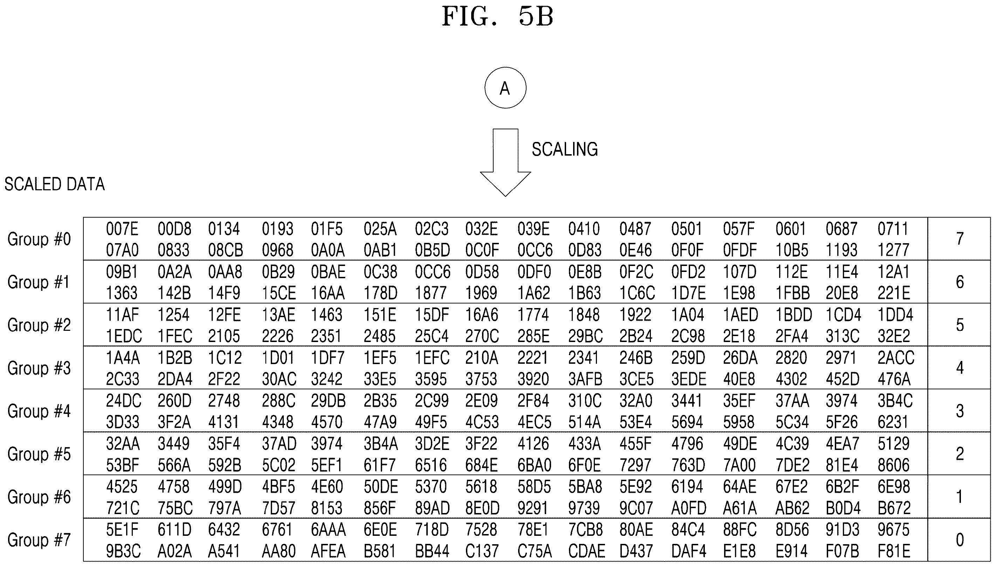

In an embodiment of the disclosure, the LUT module may store exponential function information. The LUT module may store values associated with a plurality of exponential functions. For example, the LUT module may include values associated with exponential functions corresponding to a plurality of quantized values. The values of the exponential functions stored in the LUT module may be values scaled according to scale factors. The scale factor may be determined for each value of the exponential function. The values associated with the exponential functions, which are stored in the LUT module, may be determined as one of a plurality of groups, based on each corresponding input value. For example, the values associated with the exponential functions, which are stored in the LUT module, may be classified into a plurality of groups, based on upper bits of an input value. Examples of the scale factor and data stored in the LUT module according to an embodiment of the disclosure are described in detail with reference to FIGS. 5A and 5B.

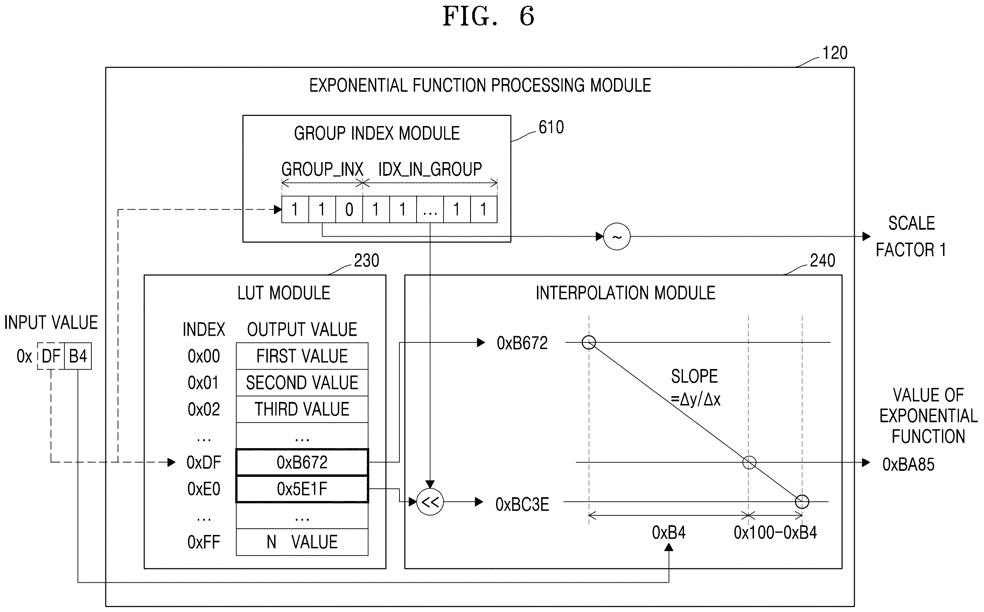

In an embodiment of the disclosure, the exponential function processing module 120 may determine a scale factor corresponding to an input value. In an embodiment of the disclosure, the exponential function processing module 120 may determine a scale factor, based on at least a portion of the input value. For example, the exponential function processing module 120 may determine a scale factor using upper bits of an input value. An example of a process by which the exponential function processing module 120 determines the scale factor, according to an embodiment of the disclosure, is described in detail with reference to FIG. 6.

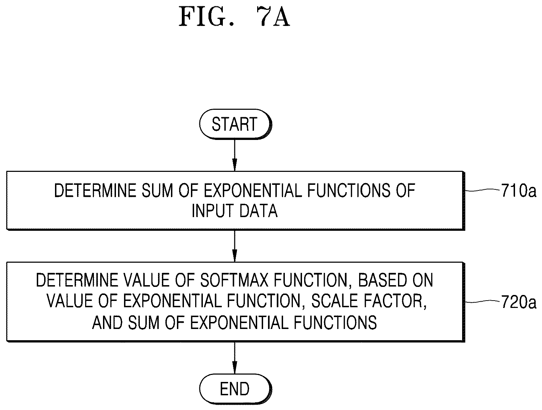

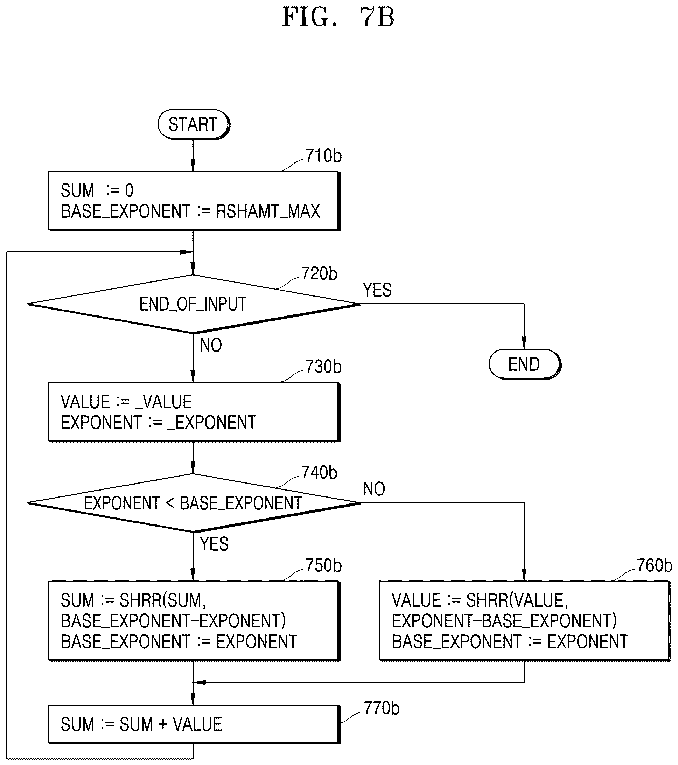

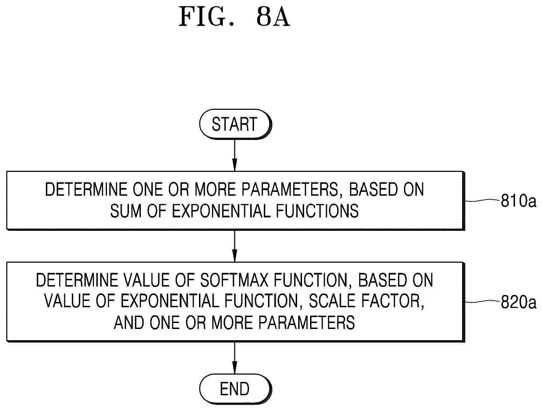

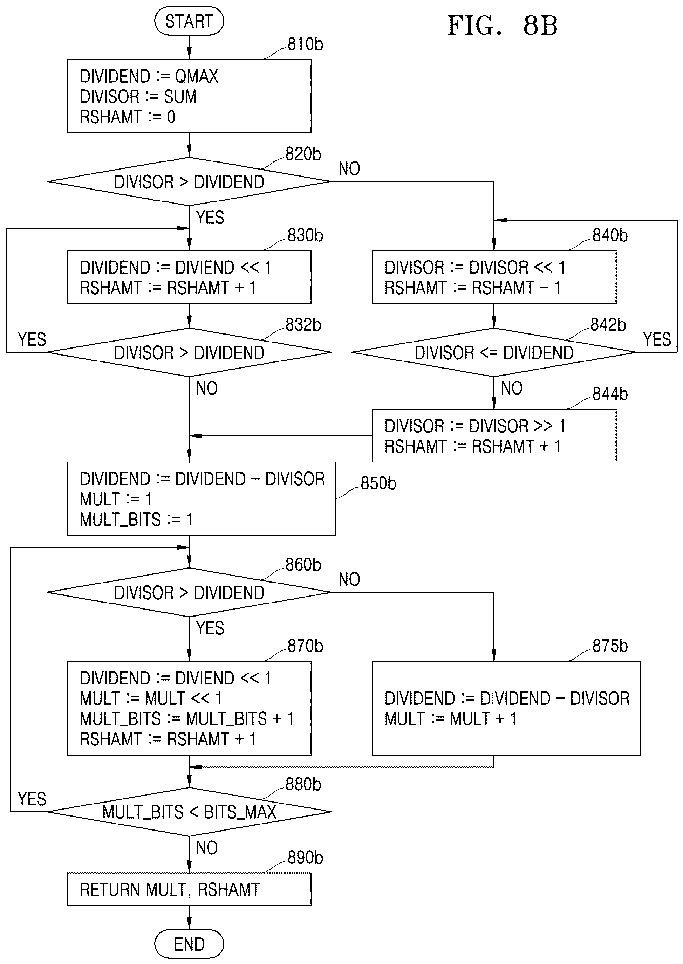

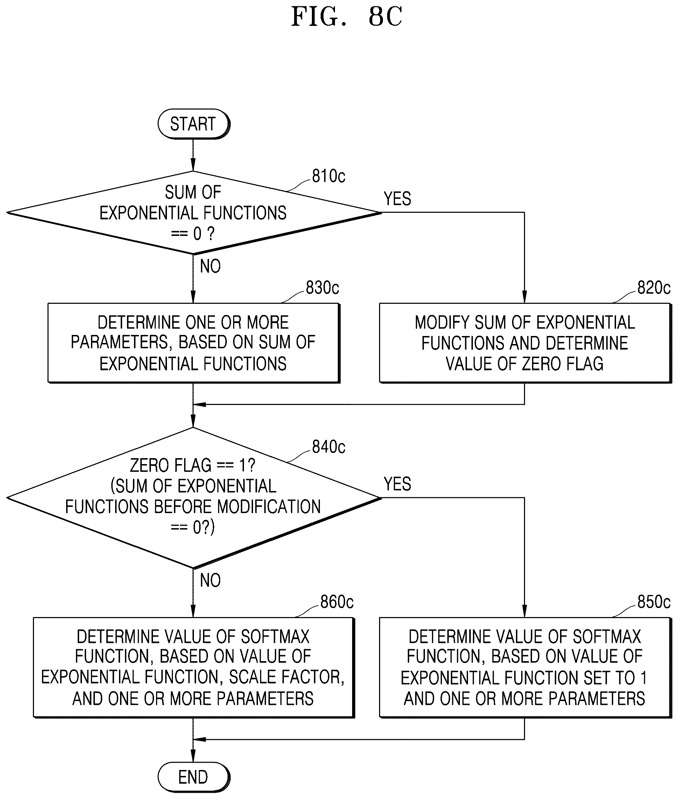

In an embodiment of the disclosure, the softmax function processing module 130 may determine the value of the softmax function for the input value, based on the value of the exponential function and the scale factor. The softmax function processing module 130 may determine the value of the exponential function for the input value, based on the value of the exponential function and the scale factor. In an embodiment of the disclosure, the softmax function processing module 130 may determine the value of the softmax function corresponding to the input value, based on the sum of the determined exponential functions. Examples of a method by which the softmax function processing module 130 determines the value of the softmax function, according to an embodiment of the disclosure, are described in detail with reference to FIGS. 7A, 7B, 8A, 8B, and 8C.

In an embodiment of the disclosure, the accelerator 110 may be an auxiliary computing device included in or otherwise associated with an electronic device that processes or is configured to process an AI operation. For example, the accelerator 110 may be an auxiliary computing device used in the processor 100 that performs an operation using machine learning or deep learning. The accelerator 110 may increase the efficiency of operations performed by the processor 100. For example, the accelerator 110 may reduce the time used by the processor 100 to perform operations repeated for processing the input function. In an embodiment of the disclosure, the processor 100 may process the softmax function using the accelerator 110.

As shown in Equation 1, the value of the softmax function includes an exponential function operation and a division operation. The accelerator 110 may output the value of the softmax function without performing at least a portion of the exponential function operation and the division operation using the exponential function processing module 120 and the softmax function processing module 130.

FIG. 2 is a block diagram illustrating the processor 100 for processing an artificial neural network (or an AI operation), according to an embodiment of the disclosure.

Referring to FIG. 2, the processor 100 according to an embodiment of the disclosure may further include a control module 210, a direct memory access (DMA) module 215, and a digital signal processing (DSP) module 220.

The control module 210 may be configured to control operations of other elements included in the processor 100. In an embodiment of the disclosure, the control module 210 may control the operation of at least one of the accelerator 110 or the DSP module 220. The control module 210 may control the accelerator 110 to output output data including the value of the softmax function, based on the input data. For example, the control module 210 may control the accelerator 110 to perform at least one of a convolution operation or a softmax operation.

According to an embodiment of the disclosure, the control module 210 may control the accelerator 110, based on a control command obtained from a central processing unit (CPU) of the electronic device including the processor 100. For example, the control module 210 may control at least one of the accelerator 110 or the DSP module 220 to perform at least a portion of a neural network operation according to a neural network operation execution command for the processor 100 of the CPU.

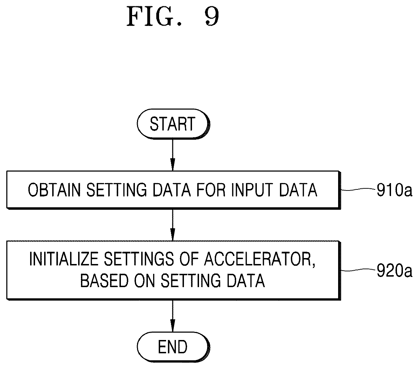

According to an embodiment of the disclosure, the control module 210 may initialize the settings of the accelerator 110. For example, the control module 210 may select at least one of a group index of the accelerator 110, a group shift unit, a parameter representation bit, or a zero point, based on setting data according to at least one of the type or the range of input data. The control module 210 may control the LUT module of the accelerator 110 to store exponential function information, based on exponential function information included in the setting data. An example of a process in which the accelerator 110 initializes the settings, according to an embodiment of the disclosure, is described in detail with reference to FIG. 9.

The DMA module 215 may be configured to communicate with other elements of the electronic device including the processor 100. The DMA module 215 may communicate with other elements without passing through the CPU of the electronic device. For example, the processor 100 may communicate with a graphic processing unit (GPU) or a neural network processing unit.

The DSP module 220 may be configured to process digital signals. Except for product and sum operations, the control module 210 may perform complex operations through the DSP module 220. However, in the process of processing AI operations, data exchange between the accelerator 110 and the DSP module 220 may cause an increase in processing time. Accordingly, when the processor 100 performs operations by utilizing the accelerator 110 as much as possible, the operation execution time may be reduced.

In an embodiment of the disclosure, the exponential function processing module 120 may include a LUT module 230 and an interpolation module 240.

The LUT module 230 may store a plurality of values and output a value corresponding to an index value from among the stored values. In an embodiment of the disclosure, the LUT module described with reference to FIG. 1 may correspond to the LUT module 230 of FIG. 2.

The LUT module 230 may store exponential function information. In an embodiment of the disclosure, the values stored in the LUT module 230 may be values of exponential functions for quantization values. The quantization value may include a value that is representable by the input value. For example, when input data is quantized to integer values of "0" to 255, the quantization values may include 256 values including the integer values of "0" to "255". For example, the LUT module 230 may output a value of an exponential function corresponding to an index (e.g., "0xDF") determined based on an input value (e.g., "0xDFB4").

In an embodiment of the disclosure, the LUT module 230 may store the scaled value of the exponential function. For example, when the value of the exponential function for the input value is "A" and the scale factor is "S", the LUT module 230 may store a value obtained by left-shifting "A" by "S" (e.g., a value of "A<<S").

In an embodiment of the disclosure, the LUT module 230 may store a smaller number of exponential function information than the number of values that are representable by the input value. The amount of data stored in the exponential function may be smaller than the maximum quantization value. For example, the input data may be quantized to be represented in sixteen bits and represent $2^{16}$ values, and the exponential function information may include values of exponential functions for indices represented in eight bits. For example, the input value may be represented as one of "0x0000" to "0xFFFF", and the exponential function information may include a value of an exponential function corresponding to an index represented as "0xYZ00" (where Y and Z are one of the values of 0 to F) among "0x0000" to "0xFFFF". In an embodiment of the disclosure, because the LUT module 230 stores a smaller amount of exponential function information than the representation range of the input data, the area implemented in hardware may be reduced.

The interpolation module 240 may determine the value of the exponential function corresponding to the input value, based on the value stored in the LUT module 230. In an embodiment of the disclosure, the interpolation module 240 may obtain a plurality of values of exponential functions corresponding to input values by referring to the LUT module 230. The interpolation module 240 may determine the value of the exponential function corresponding to the input value using the values of the exponential functions. In an embodiment of the disclosure, the interpolation module 240 may obtain a first reference value and a second reference value corresponding to the input value. The interpolation module 240 may determine the value of the exponential function corresponding to the input value by performing interpolation on the first reference value and the second reference value. For example, in order to determine the value of the exponential function for the input value of "0xDF16", the interpolation module 240 may obtain, as the first reference value, the value of the exponential function for 0xDF00 stored in the LUT module 230 and may obtain, as the second reference value, the value of the exponential function for "0xE000". The interpolation module 240 may perform interpolation on the first reference value and the second reference value using interpolation weights. The value interpolated by the interpolation module 240 may be the value of the exponential function corresponding to the input value. An example of the process in which the interpolation module 240 determines the value of the exponential function corresponding to the input value, according to an embodiment of the disclosure, is described in detail with reference to FIG. 6.

In an embodiment of the disclosure, the softmax function processing module 130 may include an operation module 250, a parameter module 260, and a post-processing module 270. The operation module 250 may be configured to perform calculations using by the accelerator 110. In an embodiment of the disclosure, the operation module 250 may be configured to perform product and sum operations. For example, the operation module 250 may be configured to perform a multiply-accumulate (MAC) operation. Because a convolution operation and an inter-matrix product, which may account for a large portion of an AI operation, are operations represented by product and sum, the accelerator 110 may accelerate an AI operation using the operation module 250.

The operation module 250 may calculate the sum of the exponential functions (e.g., a value corresponding to the denominator of the softmax function), based on at least one of the value of the exponential function or the scale factor. In an embodiment of the disclosure, the operation module 250 may scale the value of the exponential function, based on at least one of the value of the exponential function or the scale factor. The operation module 250 may calculate the sum of the exponential functions by accumulating and adding the scaled values of the exponential functions.

In an embodiment of the disclosure, the operation module 250 may scale the value of the exponential function, based on the scale factor. In an embodiment of the disclosure, the operation module 250 may scale the value of the exponential function by performing a right shift operation on the value of the exponential function by the scale factor. For example, the operation module 250 may determine, as the scaled value of the exponential function, a value of "4" that is the result of performing a right shift operation on a value "8" of the exponential function by a scale factor of 1.

In an embodiment of the disclosure, the operation module 250 may scale the value of the exponential function, based on a base scale factor. The operation module 250 may scale the value of the exponential function by performing a left shift operation the value of the exponential function by the base scale factor. For example, the operation module 250 may determine, as the scaled value of the exponential function, a value of "16" that is the result of performing a left shift operation on the value "8" of the exponential function by the base scale factor of 1. In an embodiment of the disclosure, the base scale factor may be a predetermined value depending on the settings of the accelerator 110.

In an embodiment of the disclosure, the operation module 250 may scale the value of the exponential function, based on the scale factor and the base scale factor. The operation module 250 may scale the value of the exponential function by performing a left shift operation on the value of the exponential function by a value obtained by subtracting the scale factor corresponding to the input value from the base scale factor. For example, the operation module 250 may determine, as the scaled value of the exponential function, a value of "16" that is the result of performing a left shift operation on the value "8" of the exponential function by 1, which may be obtained by subtracting the scale factor of 1 corresponding to the input value from the base scale factor of 2.

An example of an operation in which the operation module 250 determines the sum of the exponential functions, according to an embodiment of the disclosure, is described in detail with reference to FIGS. 7A and 7B. In an embodiment of the disclosure, the operation module 250 may transmit the sum of the exponential function to the parameter module 260.

The parameter module 260 may be configured to determine a parameter for calculating the value of the softmax function. In an embodiment of the disclosure, the parameter module 260 may determine at least one parameter for representing an approximate value to the sum of the exponential function. In an embodiment of the disclosure, the at least one parameter may include a first parameter and a second parameter. The value obtained by dividing the maximum quantization value of the input data by the denominator of the softmax function may be approximated to a value obtained by performing a right shift operation on the first parameter by the second parameter. The parameter module 260 according to an embodiment of the disclosure may determine the first parameter and the second parameter for representing the quantized value of the softmax function. An example of the operation of determining the parameter, according to an embodiment of the disclosure, is described in detail with reference to FIGS. 8A, 8B, and 8C. The parameter module 260 according to an embodiment of the disclosure may transmit the at least one parameter to the post-processing module 270.

The post-processing module 270 may be configured to determine the value of the softmax function. In an embodiment of the disclosure, the post-processing module 270 may determine the value of the softmax function, based on the at least one parameter, the value of the exponential function, and the scale factor corresponding to the input value. For example, the post-processing module 270 may determine the value of the softmax function by applying the scale factor and the at least one parameter to the value of the exponential function.

In an embodiment of the disclosure, the post-processing module 270 may determine the value of the softmax function, based on the sum of the exponential functions, the value of the exponential function, and the scale factor of the operation module 250. For example, the post-processing module 270 may determine the value of the softmax function by dividing the value obtained by scaling the value of the exponential function using the scale factor by the sum of the exponential functions.

The accelerator 110 may further include an input module 280, a memory 285, and an output module 290, in addition to the exponential function processing module 120 and the softmax function processing module 130 of FIG. 1.

The input module 280 may obtain input data including a plurality of quantized input values. In an embodiment of the disclosure, the input value may be a quantized value. The input module 280 may include an input buffer that stores or is configured to store input data. For example, the input buffer may sequentially obtain input values of input data from at least one of a memory 285 or another accelerator. In an embodiment of the disclosure, the input module 280 may obtain input data from the memory 285 included in the accelerator 110 or another accelerator.

The input module 280 may transmit the input data to the exponential function processing module 120. In an embodiment of the disclosure, the input module 280 may sequentially transmit the input values of the input data to the exponential function processing module 120. The input module 280 may transmit the input data to the softmax function processing module 130. The softmax function processing module 130 may use the input data obtained from the input module 280 in order to output the value of the softmax function.

The memory 285 may be configured to store information used the accelerator 110. The memory 285 may store the exponential function information. The exponential function information may include a quantized value of an exponential function. For example, the exponential function information may include a quantized value of an exponential function corresponding to a value that is representable by the quantized input value. The accelerator 110 may determine the value of the softmax function using the exponential function information. In an embodiment of the disclosure, the memory 285 may store a plurality of pieces of exponential function information according to the maximum quantization value. The memory 285 may store output data obtained from the output module 290.

The output module 290 may output the output data including the value of the softmax function. The output module 290 may include an output buffer. The output module 290 may obtain the value of the softmax function from the softmax function processing module 130. In an embodiment of the disclosure, the output module 290 may sequentially store, in the memory 285, the value of the softmax function output from the softmax function processing module 130 or transmit the value of the softmax function as an input to another accelerator.

FIG. 2 illustrates an example of the structure of the processor 100 and the accelerator 110 according to an embodiment of the disclosure, but the disclosure is not limited thereto. The processor 100 and the accelerator 110 may be configured to additionally include some elements, or some elements of the processor 100 and the accelerator 110 may be omitted.

In an embodiment of the disclosure, the accelerator 110 may further include a quantization module. The quantization module may be configured to perform quantization when the input data is not quantized. The maximum quantization value used by the accelerator 110 may be predetermined or may be transmitted along with the input data.

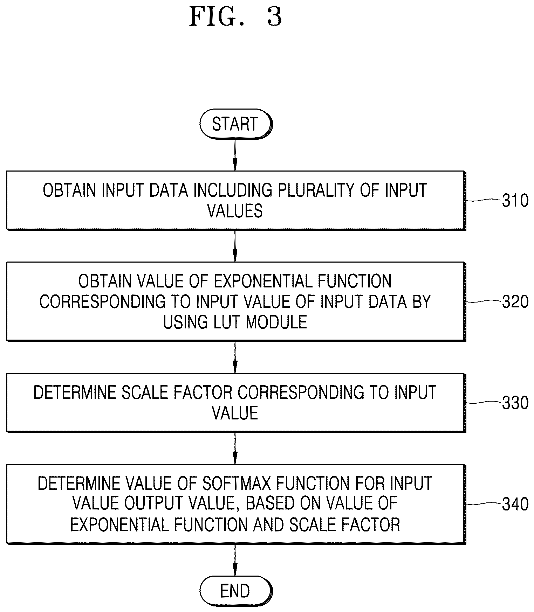

FIG. 3 is a flowchart of an operating method of the processor including the accelerator for processing the softmax function, according to an embodiment of the disclosure.

At operation 310, the processor 100 according to an embodiment of the disclosure may obtain input data including a plurality of input values. In an embodiment of the disclosure, operation 310 may be performed by the exponential function processing module 120 included in the accelerator 110 of the processor 100.

At operation 320, the processor 100 according to an embodiment of the disclosure may obtain the value of the exponential function corresponding to an input value included in the input data using the LUT module 140. In an embodiment of the disclosure, operation 320 may be performed by the exponential function processing module 120 included in the accelerator 110 of the processor 100.

At operation 330, the processor 100 according to an embodiment of the disclosure may determine a scale factor corresponding to the input value. In an embodiment of the disclosure, operation 330 may be performed by the exponential function processing module 120 included in the accelerator 110 of the processor 100.

At operation 340, the processor 100 according to an embodiment of the disclosure may determine the value of the softmax function for the input value, based on the value of the exponential function and the scale factor. In an embodiment of the disclosure, operation 340 may be performed by the softmax function processing module 130 included in the accelerator 110 of the processor 100.

The operation of the processor 100 including the accelerator 110 for processing the softmax function may not include one or more operations from among operations 310 to 340, and some operations may be omitted or may be additionally included.

FIG. 4A is a diagram illustrating quantization of an input value, according to an embodiment of the disclosure.

Referring to FIG. 4A, an unquantized input value may be a value included in a certain range. For example, the unquantized input value may be a rational number that is greater than or equal to a lower limit $X_{min}$ of the input value and less than (or less than or equal to) an upper limit $X_{max}$ of the input value.

A quantized input value may be an integer included in a certain range. For example, quantized input data may represent one of integers greater than or equal to 0 and less than or equal to a maximum quantization value (Qmax). The maximum quantization value may be a value of "$2^N-1$" (where N is an integer). For example, the maximum quantization value may be one of "63", "127", "255", "511", or "1023".

Values included in a certain range may be quantized to the same value. For example, a value greater than or equal to $X_{min}$ and less than $X_{min}+scale\_x$ may be quantized to 0, and a value greater than or equal to $X_{min}+scale\_x$ and less than $X_{min}+2*scale\_x$ may be quantized to 1. A quantization scale scale_x may be determined based on the maximum quantization value. For example, the quantization scale may divide the range greater than or equal to $X_{min}$ and less than $X_{max}$ into equal parts by the maximum quantization value. For example, scale_x may be determined as $(X_{max}-X_{min})$/Qmax.

In an embodiment of the disclosure, input data $x_i$) may be quantized to an integer m that satisfies m=($x_i$-$x_{min}$)/scale_x. For example, unquantized input data $x_i$ may be represented by Equation 2 using quantized input data m.

$$[\text{Equation 2}]$$

$$x_i \approx m \times scale_x + x_{min}$$

However, the disclosure is not limited thereto, and the quantization scale scale_x may be determined differently for each section due to a design change made by those of ordinary skill in the art.

In an embodiment of the disclosure, the accelerator 110 may quantize at least one of input data or output data. The accelerator 110 according to an embodiment of the disclosure may obtain quantized input data. The input data and the output data may include at least one from among vector-type data, matrix-type data, or tensor-type data including a plurality of quantized values. The input data may have the same vector-type, matrix-type, or tensor-type data size as the output data. The input data and the output data may be quantized to have the same maximum quantization value.

When the input data of the accelerator 110 of FIG. 1 according to an embodiment of the disclosure is quantized, the memory capacity required to store the data is reduced. In addition, calculating integers has an advantage of lower computational complexity than calculating decimals.

FIG. 4B is a diagram illustrating quantization of a value of an exponential function, according to an embodiment of the disclosure.

Referring to FIG. 4B, an unquantized value EXP of an exponential function may be a value included in a certain range. For example, the unquantized value of the exponential function may be a rational number that is greater than or equal to a lower limit $e_{min}$ of the value of the exponential function and less than (or less than or equal to) an upper limit $e_{max}$ of the value of the exponential function. The lower limit of the exponential function may be the value of the exponential function for the lower limit of the input value, and the upper limit of the exponential function may be the value of the exponential function for the upper limit of the input value.

A quantized value (illustrated as "Quantized EXP") of an exponential function may be an integer included in a certain range. A value of an exponential function may be quantized based on a quantization scale scale_EXP of the exponential function. The quantization scale scale_EXP of the exponential function may be determined based on the upper limit of the exponential function and the lower limit of the exponential function. For example, scale_EXP may be determined as $(e_{max}-e_{min})$/Em. The maximum quantization value Em may be a predetermined value. For example, Em may be "65,535" (e.g., $2^{16}$-1).

According to an embodiment of the disclosure, the value EXP of the exponential function may be quantized so that the quantization value for the lower limit $e_{min}$ is 0. Referring to a first graph 410b, the quantized value of the exponential function may represent one of the integers greater than or equal to "0" and less than or equal to Em. For example, the value $e_i$ of the exponential function may be quantized to an integer n that satisfies Equation 3.

$$[Equation 3]$$

$$e_i \approx n * scale_{EXP} + e_{min}$$

According to an embodiment of the disclosure, the value of the exponential function may be quantized so that the quantization value for the lower limit $e_{min}$ is a particular constant. Referring to a second graph 420b, the quantized value of the exponential function may represent one of the integers greater than or equal to a constant ZP and less than or equal to Em+ZP. The second graph 420b may be obtained by parallel movement of the first graph 410b by the constant ZP in the y-axis direction. In an embodiment of the disclosure, the particular constant may be determined based on the lower limit and the quantization scale. For example, the particular constant ZP may be determined as ZP=$e_{min}$/scale_EXP. The constant may be represented as a zero point. In this example, Equation 3 may be expressed as Equation 4.

$$[Equation 4]$$

$$e_i \approx n * scale_{EXP} + e_{min} = (n + \frac{e_{min}}{scale_{EXP}}) * scale_{EXP} = (n + ZP) * scale_{EXP}$$

The exponential function information according to an embodiment of the disclosure may include the quantized value of the exponential function described with reference to the first graph 410b or may include the quantized value of the exponential function described with reference to the second graph 420b.

FIG. 4C is a diagram illustrating quantization of an input value and a value of an exponential function, according to an embodiment of the disclosure.

Referring to FIG. 4C, a third graph 410c based on unquantized data and a fourth graph 420c based on quantized data are shown. The third graph 410c is a graph between an input value (illustrated as "Input") and a value (EXP) of an exponential function. According to an embodiment of the disclosure, the input value and the value EXP of the exponential function may each be quantized. The fourth graph 420c is a graph between a quantized value (illustrated as "Quantized EXP") of an exponential function and a quantized input value (illustrated as "Quantized input").

According to an embodiment of the disclosure, the input value may be quantized based on the maximum quantization value Qmax for the input value, and the value of the exponential function may be quantized based on the maximum quantization value Em for the value of the exponential function. For example, the input value may be quantized as illustrated in FIG. 4A, and the value of the exponential function may be quantized as in the first graph 410b or the second graph 420b illustrated in FIG. 4B.

The fourth graph 420c may represent the values $E_0$, $E_1$, ..., $E_{Qmax}$ of the exponential function for the quantized input values "0", "1", ..., Qmax. According to an embodiment of the disclosure, the value of the exponential function for the lower limit may be set to "0" as illustrated in the first graph 410b of FIG. 4B, or the value of the exponential function for the lower limit may be set to a particular constant (e.g., the constant ZP) as illustrated in the second graph 420b.

FIG. 5A is a diagram illustrating scale factors and groups of data stored in a LUT module, according to an embodiment of the disclosure. FIG. 5B is a diagram illustrating scale factors and groups of data stored in a LUT module, according to an embodiment of the disclosure.

Referring to FIG. 5A, original data and scaled data of the original data regarding the value of the exponential function, according to an embodiment of the disclosure, are shown. In an embodiment of the disclosure, the original data may include exponential function information. The original data may include a plurality of values of quantized exponential functions. The values of the quantized exponential functions may correspond to quantized input values. For example, the value of the exponential function corresponding to the quantized input value of "0" may be "0001", and the value of the exponential function corresponding to the quantized input value of "1" may be "0002".

Referring to FIG. 5A, the input value according to an embodiment of the disclosure may be quantized to 256 (= $2^8$ or eight bits) quantized values, and the value of the exponential function may be quantized to 65,536 (= $2^{16}$ or sixteen bits) quantized values. The value of the exponential function may be expressed in hexadecimal format. The original data may be expressed as an input value that is increased by "1" as it progresses in a rightward direction in the same row and is increased by "16" as it progresses in a downward direction in the same column.

The value of the exponential function of the original data may increase in significant digits as the input value increases. For example, the value of the exponential function corresponding to the quantized input value of "254" may be "F07B," which may have sixteen significant digits. The value of the exponential function corresponding to the input value of "2" may be "0002," which may have two significant digits.

According to an embodiment of the disclosure, the input values of the original data may be classified into one of a plurality of groups. For example, group #0 may include values of the exponential function corresponding to input values of "0" to "31", and group #7 may include values of the exponential function corresponding to input values of "234" to "255".

In an embodiment of the disclosure, the number of groups may be determined based on a group index. For example, the group index may mean a $\log_2$ scale value of the number of groups. For example, when the group index is 3, there may be eight groups. In an embodiment of the disclosure, a plurality of groups may include the same number of values of exponential functions. For example, when there are eight groups, each group may include thirty-two values of exponential functions.

According to an embodiment of the disclosure, a group of values of exponential functions may be determined based on the group index and the input value. According to an embodiment of the disclosure, the group of values of exponential functions may be determined by extracting a number of upper bits of the input value which is the same as the number of group indices. For example, when the group index is 3, a value indicated by the three upper bits of the input value may be determined as a group number. For example, the input value of "1" is "00000001" when expressed in eight bits, and the three upper bits are "000", and thus, the group number (#N) may be 0. The input value of "255" is "11111111" when expressed in eight bits, and the three upper bits may be "111", and thus, the group number (#N) may be 7. The upper bits of the input value corresponding to on the group index may be referred to as group bits.

According to an embodiment of the disclosure, the original data may be scaled. The scale factor may refer to information about scaling of the original data. For example, when the scale factor is 1, the value of the exponential function may be scaled to increase by $2^1$ times. The scale factor may refer to scaling information by at least one of log scale, exponential scale, or multiple scale.

Referring to FIG. 5B, scaled data may be the result of scaling the original data, based on the scale factor. The values of the exponential function included in group #N may be scaled based on the scale factor corresponding to group #N. For example, exponential functions included in group #0 may indicate a value increased by $2^7$, based on the scale factor. Before scaling, the value of the exponential function corresponding to the input value of "2" was "0002," which has 2 significant digits. However, after scaling, the value of the exponential function corresponding to the input value of "2" may be "00D8," which has 8 significant digits. As the original data is scaled and stored, the significant digits of the value of the exponential function may increase. Accordingly, an error in the value of the softmax function determined based on the value of the exponential function with the increased significant digits may be reduced.

According to an embodiment of the disclosure, the scale factor may be determined for each group. For example, group #0 may have a scale factor of 7, group #1 may have a scale factor of 6, ... and group #7 may have a scale factor of 0. According to an embodiment of the disclosure, the scale factor of the group may be determined based on shift units. For example, when the group shift unit is 1, the difference in scale factor between groups may be 1, as illustrated in FIG. 5B. For example, when the group shift unit is 3, the difference in scale factor between groups may be 3. For example, the scale factor of the group may be determined as 0, 3, 6, ..., etc.

According to an embodiment of the disclosure, the LUT module 230 may store the scaled data. The scaled data may be obtained from the outside of the accelerator 110. For example, the scaled data may be data stored in a memory that is present outside the processor 100.

FIG. 5B illustrates an example in which the input value is expressed in eight bits, the value of the exponential function is expressed in sixteen bits, the group index is 3, the shift unit is 1, and the original data is scaled to increase by $2^N$ according to the scale factor, but the disclosure is not limited thereto, and the representation method of the disclosure may be replaced with other representation methods.

FIG. 6 is a block diagram illustrating an operation of an exponential function processing module 120 according to an embodiment of the disclosure.

Referring to FIG. 6, the exponential function processing module 120 according to an embodiment of the disclosure may determine the value of the exponential function for the input value. In an embodiment of the disclosure, the exponential function processing module 120 may include the LUT module 230 and the interpolation module 240. In an embodiment of the disclosure, the input value may be a sixteen-bit number expressed in hexadecimal, such as "0xDFB4." In an embodiment of the disclosure, the input value may include a table index included in an upper bit region and an interpolation weight included in a lower bit region. For example, the table index may refer to the upper bit value "0xDF" of the input value "0xDFB4," and the interpolation weight may refer to the lower bit value "0xB4" of the input value "0xDFB4."

In an embodiment of the disclosure, the LUT module 230 may output a value of an exponential function corresponding to an input value. The LUT module 230 may store exponential function information. The LUT module 230 may store a value of an exponential function corresponding to an index. For example, the LUT module 230 may store the value "0xXY00" of the exponential function for the index "0xXY." For example, for the index "0x00," the LUT module 230 may store a first value that is the value "0x0000" of the exponential function and for the index "0xFF," the LUT module 230 may store an $N^{th}$ value that is the value "0xFF00" of the exponential function.

In an embodiment of the disclosure, the LUT module 230 may output a value of the exponential function corresponding to an index that is determined based on at least a portion of the input value. In an embodiment of the disclosure, the LUT module 230 may output the value of the exponential function corresponding to a first index value that is determined based on at least upper bits of the input value. For example, when the input value is "0xDFB4," the value "0xDF" that may correspond to upper eight bits (e.g., two characters expressed in hexadecimal) may be determined as the first index value. For example, the value "0xDF" expressed in hexadecimal may be expressed as "0b1101111111111111" expressed in binary. The LUT module 230 may output the value of the exponential function corresponding to the first index value. The value of the exponential function corresponding to the first index value may be referred to as a first reference value. For example, the LUT module 230 may output the first reference value "0xB672."

In an embodiment of the disclosure, the LUT module 230 may output a value of an exponential function corresponding to a second index value that is determined based on the first index value. The second index may be a value that is relatively close to the first index. For example, the second index may be a value increased from the first index by 1. The LUT module 230 may output the value of the exponential function corresponding to the second index value. The value of the exponential function corresponding to the second index value may be referred to as a second reference value. For example, the LUT module 230 may output the second reference value "0xBC3E," which is the value of the exponential function corresponding to the second index "0xE0."

In an embodiment of the disclosure, the interpolation module 240 may determine the value of the exponential function for the input value, based on one or more values of exponential functions output from the LUT module 230. For example, the interpolation module 240 may determine the value of the exponential function corresponding to the input value, based on the first reference value and the second reference value.

In an embodiment of the disclosure, the interpolation module 240 may determine the value of the exponential function for the input value according to one or more values of exponential functions output from the LUT module 230, based on at least a portion of the input value. The interpolation module 240 may identify particular lower bits of the input value. In an embodiment of the disclosure, the lower bits of the input value may be the remainder excluding the upper bits of the input value for determining the index of the LUT module. For example, the lower bits of the input value may be the lower sixteen bits, and the value of the lower bits of the input value may be "0xB4".

In an embodiment of the disclosure, the interpolation module 240 may perform interpolation on one or more values of exponential functions output from the LUT module 230, based on the lower bits of the input value. For example, the interpolation module 240 may perform interpolation on the first reference value and the second reference value at a ratio of 0xB4 and 0x4C (e.g., "0x100-0xB4"). The interpolation module 240 may determine, as the value of the exponential function for the input value, "0xBA85" that is the result of performing the interpolation.

Referring to FIG. 6, the exponential function processing module 120 according to an embodiment of the disclosure may determine the scale factor for the input value. The exponential function processing module 120 may include a group index module 610.

In an embodiment of the disclosure, the group index module 610 may determine the scale factor, based on the input value. The group index module 610 may determine the scale factor, based on the upper bits of the input value. Information input to the group index module 610 may be identical to the upper bits of the input value for determining the index of the LUT module 230. For example, the group index module 610 may determine the scale factor, based on "0xDF" that are upper eight bits of the input value"""".

In an embodiment of the disclosure, the upper bits of the input value may be split into a first bitstring and a second bitstring. For example, the first bitstring may refer to the upper bits of the input value that is equal to the group index, and the second bitstring may refer to the remaining bits excluding the first bitstring. For example, when the value of the group index is "3", the first bitstring may be "0b110" that are three upper bits of the input value, and the second bitstring may be the remaining bits "0b1111111111111." In an embodiment of the disclosure, a bitstring may refer to a set of bits expressed in binary numbers.

In an embodiment of the disclosure, the group index module 610 may determine the scale factor, based on at least one of a group shift unit or a group index. The group index may be an index related to the number of groups of exponential function information stored in the LUT module 230.

In an embodiment of the disclosure, the group index module 610 may determine the scale factor, based on upper bits of the input value as many as the group index value. The group index module 610 may determine the scale factor, based on the first bitstring. In an embodiment of the disclosure, the group index module 610 may determine the scale factor by performing a NOT GATE operation on the upper bits of the input value as many as the value of the group index. For example, when the value of the group index is "3", the value of the scale factor may be determined as a value of "1" (="0b001") that is the result of the NOT GATE operation on "0b110," which is the value of three upper bits of the input value.

In an embodiment of the disclosure, the group index module 610 may determine the difference in scale factor between the groups, based on the group shift unit. In an embodiment of the disclosure, the group index module 610 may determine the scale factor by multiplying the group shift unit by the result of performing the NOT GATE operation on the upper bits of the input value which is equal to a number of bits indicating the value of the group index. For example, when the value of the group index is 3 and the group shift unit is 3, the value of the scale factor may be determined as a value of "3", that is obtained by multiplying the group shift unit "3" by 1 (="0b001") that is the result of performing the NOT GATE operation on "0b110," which is the value of three upper bits of the input value.

In an embodiment of the disclosure, the group index module 610 may determine the order of the input value within the group. The group index module 610 may determine the order within the group, based on the remaining value excluding the value of the group index among the upper bits of the input value. In an embodiment of the disclosure, the group index module 610 may determine the scale factor based on the second bitstring. For example, the remaining value excluding the upper three bits (e.g., excluding the bits used to represent the group index in the input value "0b11011111111111111") may be expressed as "0b1111111111111." In this example, the order of the input value within the group may be determined as 8191 (="0b1111111111111"). For example, this may mean the last order in the group. In addition, the next value of the input value may be another group, which may mean that the scale factor may be changed. When the remaining values excluding the value of the group index among the certain upper bits of the input value are all "1", the group index module 610 may determine that the order within the group is last. In an embodiment of the disclosure, the group index module 610 may be implemented to perform a bitwise AND GATE operation.

In an embodiment of the disclosure, the interpolation module 240 may adjust the second reference value, based on the order of the input value within the group. When the order of the input value within the group is last, the interpolation module 240 may increase the second reference value. For example, when the order of the input value within the group is last, the interpolation module 240 may perform a left shift operation on the second reference value. For example, the interpolation module 240 may determine the value of the exponential function for the input value, based on the first reference value and "0xBC3E" that is obtained by performing a left shift operation on the second reference value "0x5E1F."

In an embodiment of the disclosure, the interpolation module 240 may perform a left shift operation, based on the group shift unit. For example, when the group shift unit is 3, the interpolation module 240 may perform a left shift operation on the second reference value by 3. For example, the interpolation module 240 may increase the second reference value by $2^3$ times.

In an embodiment of the disclosure, the group index module 610 may be separately implemented into a first group index module that determines the scale factor, based on the group index and a second group index module that determines the order within the group. According to an embodiment of the disclosure, the first group index module may receive the entire input value, the value input to the LUT module 230, and at least one value among a number of the upper bits of the input value which is equal to a number of bits used to represent the value of the group index, and may output the scale factor. According to an embodiment of the disclosure, the second group index module may receive the entire input value, the value input to the LUT module 230, and at least one value among the remaining values excluding the value input to the first group index module in the values input to the LUT module 230, and may determine the order within the group. In an embodiment of the disclosure, at least one of the first group index module or the second index module may be included in the interpolation module 240.

As the representation range (e.g., the number of bits) of the input value increases, the memory capacity for the LUT module 230 of the accelerator 110 to store the values of the exponential functions corresponding to all input values may increase exponentially. When the LUT module 230 stores only the value of the exponential function corresponding to a portion of the input value, the accuracy may be lowered. The exponential function processing module 120 according to an embodiment of the disclosure may lower the memory capacity of the LUT module 230 used by the accelerator 110 using the value of the exponential function scaled based on the scale factor, and may increase the accuracy of the value of the exponential function for the input value.

FIG. 7A is a flowchart of a method by which the processor 100 including the accelerator 110 determines the value of the softmax function, according to an embodiment of the disclosure.

At operation 710a, the accelerator 110 according to an embodiment of the disclosure may determine the sum of the exponential functions of the input data. The accelerator 110 may determine the sum of the exponential functions by accumulating and adding the value of the exponential function for the input value determined through the exponential function processing module 120.

In an embodiment of the disclosure, the accelerator 110 may determine the sum of the exponential functions, based on the base scale factor. The sum of the exponential functions determined based on the base scale factor may be a value obtained by scaling the actual sum of the values of the exponential functions of the input values.

In an embodiment of the disclosure, the accelerator 110 may store the sum of the exponential functions in the memory. The memory may include a register or a static random access memory (SRAM). The accelerator 110 may determine a shift coefficient, based on the capacity of the memory and the upper limit of the sum of the exponential functions. In an embodiment of the disclosure, the capacity of the memory may be a predetermined value.

In an embodiment of the disclosure, the upper limit of the sum of the exponential functions may be determined based on the number of input values included in the input data. The maximum value that is representable by the value of the exponential function may be determined based on the representable range (e.g., sixteen bits) of the value of the exponential function and the zero point. The upper limit of the sum of the exponential functions may be determined based on the value obtained by multiplying the number of input values by the maximum value that is representable by the exponential function. When obtaining the input data, the accelerator 110 may determine the upper limit of the sum of the exponential functions, based on the representable range of the value of the exponential function, the number of input values, and the value of the zero point.

In an embodiment of the disclosure, the accelerator 110 may adjust the scale factor and the base scale factor, based on the capacity of the memory and the upper limit of the sum of the exponential functions. The accelerator 110 may determine the shift coefficient, based on the difference between the capacity of the memory in bit units and the log scale value of the upper limit of the sum of the exponential functions. In an embodiment of the disclosure, the capacity of the memory may be greater than the number of bits for representing the upper limit of the sum of the exponential functions. For example, the memory may represent nineteen bits, and eighteen bits may be used to represent the upper limit of the sum of the exponential functions. The accelerator 110 may determine the value of the shift coefficient to be "1", which may be the difference between the memory capacity and the number of bits for representing the upper limit of the sum of the exponential functions.

In an embodiment of the disclosure, the capacity of the memory may be less than the number of bits for representing the upper limit of the sum of the exponential functions. For example, the memory may represent eighteen bits, and nineteen bits may be used to represent the upper limit of the sum of the exponential functions. The accelerator 110 may determine the value of the shift coefficient to be "-1", which is the difference between the memory capacity and the number of bits for representing the upper limit of the sum of the exponential functions.

The accelerator 110 may adjust the scale factor and base scale factor, based on the shift coefficient. In an embodiment of the disclosure, the accelerator 110 may add the shift coefficient to each of the scale factor and the base scale factor. When the capacity of the memory of the accelerator 110 according to an embodiment of the disclosure is greater than the number of bits for representing the maximum value of the sum of the exponential functions, the accelerator 110 may increase the scale factor and the base scale factor by the shift coefficient. The accelerator 110 may improve the accuracy of the sum of the exponential functions by increasing the scale factor and the base scale factor.

When the capacity of the memory of the accelerator 110 according to an embodiment of the disclosure is less than the number of bits for representing the maximum value of the sum of the exponential functions, the accelerator 110 may reduce the scale factor and the base scale factor by an absolute value of the shift coefficient. The accelerator 110 may prevent overflow of the memory storing the sum of the exponential functions by reducing the scale factor and the base scale factor.

At operation 720a, the accelerator 110 according to an embodiment of the disclosure may determine the value of the softmax function, based on the value of the exponential function, the scale factor, and the sum of the exponential functions. The accelerator 110 may determine the value of the softmax function by dividing the result of scaling the value of the exponential function using the scale factor by the sum of the exponential functions.

In an embodiment of the disclosure, the accelerator 110 may determine the value of the softmax function, based on the base scale factor. The accelerator 110 may determine the value of the softmax function by dividing the result of scaling the value of the exponential function using the scale factor and the base scale factor by the sum of the exponential functions.

The operation of the processor 100 including the accelerator 110 for processing the softmax function may not include one or more operations from among operations 710a and 720a, and some operations may be omitted or may be additionally included.

FIG. 7B is a flowchart of a method by which the processor 100 including the accelerator 110 determines the sum of exponential functions, according to an embodiment of the disclosure.

The method of determining the sum of the exponential functions, according to an embodiment of the disclosure, may be performed by the operation module 250 of FIG. 2. The operation module 250 may determine the sum of the exponential functions, based on the value of the exponential function.

At operation 710b, the operation module 250 may determine the sum SUM of the exponential functions and the value of the base scale factor BASE_EXPONENT. The operation module 250 may initialize the sum of the exponential functions to "0". The operation module 250 may determine the base scale factor, based on setting data. For example, the operation module 250 may determine a predetermined value RSHAMT_MAX as the base scale factor.

At operation 720b, the operation module 250 may determine whether an additional value of an exponential function exists. When there is an additional value of an exponential function (YES at operation 720b), the operation module 250 may update the sum SUM of the exponential functions, based on the value of the exponential function. When there is no additional value of an exponential function (NO at operation 720b), the method may proceed to operation 730b.

At operation 730b, the operation module 250 may obtain the value VALUE of the exponential function and the scale factor EXPONENT. According to an embodiment of the disclosure, the operation module 250 may obtain the scale factor EXPONENT and the value VALUE of the exponential function corresponding to the input value from the exponential function processing module 120.

At operation 740b, the operation module 250 may compare the scale factor EXPONENT with the base scale factor BASE_EXPONENT. When the base scale factor BASE_EXPONENT is greater than the scale factor EXPONENT (YES at operation 740b), the method may proceed to operation 750b. When the base scale factor BASE_EXPONENT is less than or equal to the scale factor EXPONENT (NO at operation 740b), the process may proceed to operation 760b.

At operation 750b, the operation module 250 may scale the sum SUM of the exponential functions, based on the scale factor EXPONENT and the base scale factor BASE_EXPONENT. The operation module 250 may perform a right shift operation SHRR on the sum SUM of the exponential functions, based on the difference between the base scale factor BASE_EXPONENT and the scale factor EXPONENT. The operation module 250 may update the value of the base scale factor BASE_EXPONENT of the input value with the value of the scale factor EXPONENT.

At operation 760b, the operation module 250 may scale the value VALUE of the exponential function, based on the scale factor EXPONENT and the base scale factor BASE_EXPONENT. The operation module 250 may perform a right shift operation SHRR on the value VALUE of the exponential function, based on the difference between the scale factor EXPONENT and the base scale factor BASE_EXPONENT. The operation module 250 may update the value of the base scale factor BASE_EXPONENT of the input value with the value of the scale factor EXPONENT.

At operation 770b, the operation module 250 may update the sum SUM of the exponential functions with a value obtained by adding the sum SUM of the exponential functions to the value VALUE of the exponential function. In an embodiment of the disclosure, the operation module 250 may additionally add a constant (e.g., a zero point value) to the sum SUM of the exponential functions. The operation module 250 may proceed to operation 720b to determine the sum SUM of the exponential functions by accumulating and summing all values of exponential functions.

FIG. 7B illustrates an example in which the base scale factor is set, but the disclosure is not limited thereto, and the operation module 250 according to an embodiment of the disclosure may operate even when the base scale factor is not set. For example, when the base scale factor is not set, operations 740b, 750b, and 760b may be omitted.

The operation of the operation module 250 for determining the sum of the exponential functions may not include one or more operations from among operations 710b to 770b, and some operations may be omitted or may be additionally included.

FIG. 8A is a flowchart of a method by which the processor 100 including the accelerator 110 determines the value of the softmax function using the parameter, according to an embodiment of the disclosure.

At operation 810a, the accelerator 110 according to an embodiment of the disclosure may determine one or more parameters, based on the sum of the exponential functions. The one or more parameters may include parameters for replacing the sum of the exponential functions. The one or more parameters may include parameters for approximating division of the total sum of the exponential function using a shift operation and a multiplication operation to determine the value of the softmax function.

According to an embodiment of the disclosure, the one or more parameters may include a first parameter and a second parameter. The first parameter and the second parameter may be determined so that a value obtained by dividing the maximum quantization value of the value of the exponential function by the sum of the exponential functions is equal to a value obtained by performing a right shift operation on the first parameter by the second parameter. In an embodiment of the disclosure, the accelerator 110 may determine the one or more parameters using the method described with reference to FIG. 8B.

In an embodiment of the disclosure, at least one of the first parameter or the second parameter may be determined based on the base scale factor. For example, the first parameter and the second parameter may be determined so that the value obtained by dividing the maximum quantization value of the value of the exponential function by the sum of the exponential functions and then performing a shift operation the resulting value by the base scale factor is equal to the value obtained by performing a right shift operation on the first parameter by the second parameter.

At operation 820a, the accelerator 110 according to an embodiment of the disclosure may determine the value of the softmax function, based on the value of the exponential function, the scale factor, and the one or more parameters. The accelerator 110 may determine the value of the softmax function by performing at least one of a product operation, a sum operation, or a shift operation on the value scaled based on the value of the exponential function and the scale factor using the one or more parameters.

In an embodiment of the disclosure, when the parameter is not determined using the base scale factor at operation 810a, the accelerator 110 may determine the value of the softmax function, based on the value scaled based on the base scale factor, the value of the exponential function, and the scale factor.

The operation of the processor 100 including the accelerator 110 for processing the softmax function may not include one or more operations from among operations 810a and 820a, and some operations may be omitted or may be additionally included.

FIG. 8B is a flowchart of the operation of the parameter module 260 of the accelerator 110, according to an embodiment of the disclosure.

The method of determining the parameter, according to an embodiment of the disclosure, may be performed by the parameter module 260 of FIG. 2. The parameter module 260 may determine the parameter, based on the maximum quantization value (QMAX) and the sum (SUM) of the quantized exponential functions. The parameter may include a first parameter (MULT) and a second parameter (RSHAMT). The parameter may be a value for approximating a value obtained by dividing the maximum quantization value by the sum of the quantized exponential functions. In an embodiment of the disclosure, the value obtained by dividing the maximum quantization value by the sum of the quantized exponential functions may be approximated to a value obtained by performing a right shift operation on the first parameter by the second parameter.

At operation 810b, the parameter module 260 may determine a value of a variable for determining the parameter. A variable DIVIDEND may be initialized to the maximum quantization value. A variable DIVISOR may be initialized to the sum of the exponential functions. A variable RSHMAT may be initialized to "0". The parameter module 260 may proceed to operation 820b.

At operation 820b, the parameter module 260 may compare a magnitude of the variable DIVISOR with a magnitude of the variable DIVIDEND. For example, the parameter module 260 may determine whether the variable DIVISOR is greater than the variable DIVIDEND. When the variable DIVISOR is greater than the variable DIVIDEND, the parameter module 260 may proceed to operation 830b. When the variable DIVISOR is less than or equal to the variable DIVIDEND, the parameter module 260 may proceed to operation 840b.

At operation 830b, the parameter module 260 may update the value of the variable DIVIDEND and the value of the variable RSHMAT. In an embodiment of the disclosure, the parameter module 260 may perform a left shift operation on the value of the variable DIVIDEND, for example by left shifting the value of the variable DIVIDEND by 1. For example, the parameter module 260 may update the value of the variable DIVIDEND with a value that is doubled. In an embodiment of the disclosure, the parameter module 260 may update the value of variable RSHMAT with a value increased by 1. For example, when the value of the variable RSHMAT is 0, the parameter module 260 may change the value of the variable RSHMAT to 1. The parameter module 260 may proceed to operation 832b.

At operation 832b, the parameter module 260 may compare a magnitude of the variable DIVISOR with a magnitude of the variable DIVIDEND. For example, the parameter module 260 may determine whether the variable DIVISOR is greater than the variable DIVIDEND. When the variable DIVISOR is greater than the variable DIVIDEND, the parameter module 260 may proceed to operation 830b. When the variable DIVISOR is less than or equal to the variable DIVIDEND, the parameter module 260 may proceed to operation 850b.

At operation 840b, the parameter module 260 may update the value of the variable DIVISOR and the value of the variable RSHMAT. In an embodiment of the disclosure, the parameter module 260 may perform a left shift operation on the value of the variable DIVISOR, for example by left shifting the value of the variable DIVISOR by 1. For example, the parameter module 260 may update the value of the variable DIVISOR with a value that is doubled. In an embodiment of the disclosure, the parameter module 260 may update the value of variable RSHMAT with a value decreased by 1. For example, when the value of the variable RSHMAT is 0, the parameter module 260 may change the value of the variable RSHMAT to -1. The parameter module 260 may proceed to operation 842b.

At operation 842b, the parameter module 260 may compare a magnitude of the variable DIVISOR with a magnitude of the variable DIVIDEND. For example, the parameter module 260 may determine whether the variable DIVISOR is less than or equal to the variable DIVIDEND. When the variable DIVISOR is less than or equal to the variable DIVIDEND, the parameter module 260 may proceed to operation 840b. When the variable DIVISOR is greater than the variable DIVIDEND, the parameter module 260 may proceed to operation 844b.

At operation 844b, the parameter module 260 may update the value of the variable DIVISOR and the value of the variable RSHMAT. In an embodiment of the disclosure, the parameter module 260 may perform a right shift operation on the value of the variable DIVISOR, for example by right shifting the value of the variable DIVISOR by 1. For example, the parameter module 260 may update the value of the variable DIVISOR with a value that is halved (e.g., divided in half). In an embodiment of the disclosure, the parameter module 260 may update the value of variable RSHMAT with a value increased by 1. For example, when the value of the variable RSHMAT is -1, the parameter module 260 may change the value of the variable RSHMAT to 0. The parameter module 260 may proceed to operation 850b.

At operation 850b, the parameter module 260 may determine a value of a variable for determining the parameter. The parameter module 260 may update the value of the variable DIVIDEND with the difference between the value of the variable DIVIDEND and the value of the variable DIVISOR. The parameter module 260 may determine the variable MULT to be 1. The parameter module 260 may determine the variable MULT_BITS to be 1. In an embodiment of the disclosure, the parameter module 260 may determine the variable MULT and the variable MULT_BITS prior to operation 850b. For example, the parameter module 260 may determine the variable MULT and the variable MULT_BITS at operation 810b. The parameter module 260 may proceed to operation 860b.

At operation 860b, the parameter module 260 may compare a magnitude of the variable DIVISOR with a magnitude of the variable DIVIDEND. For example, the parameter module 260 may identify whether the variable DIVISOR is greater than the variable DIVIDEND. When the variable DIVISOR is greater than the variable DIVIDEND, the parameter module 260 may proceed to operation 870b. When the variable DIVISOR is less than or equal to the variable DIVIDEND, the parameter module 260 may proceed to operation 875b.

At operation 870b, the parameter module 260 may update the value of the variable DIVIDEND, the value of the variable MULT, the value of the variable MULT_BITS, and the value of the variable RSHMAT. In an embodiment of the disclosure, the parameter module 260 may perform a left shift operation on the value of the variable DIVIDEND, for example by left shifting the value of the variable DIVIDEND by 1. For example, the parameter module 260 may update the value of the variable DIVIDEND with a value that is doubled. In an embodiment of the disclosure, the parameter module 260 may perform a left shift operation on the value of the variable MULT, for example by left shifting the value of the variable MULT by 1. In an embodiment of the disclosure, the parameter module 260 may update the value of the variable MULT_BITS with a value increased by 1. For example, when the value of the variable MULT_BITS is 1, the parameter module 260 may change the value of the variable MULT_BITS to 2. In an embodiment of the disclosure, the parameter module 260 may update the value of variable RSHMAT with a value increased by 1. For example, when the value of the variable RSHMAT is 1, the parameter module 260 may change the value of the variable RSHMAT to 2. The parameter module 260 may proceed to operation 880b.

At operation 875b, the parameter module 260 may update the value of the variable DIVIDEND with the difference between the value of the variable DIVIDEND and the value of the variable DIVISOR. The parameter module 260 may update the value of the variable MULT with a value increased by 1. The parameter module 260 may proceed to operation 880b.

At operation 880b, the parameter module 260 may identify whether the variable BITS_MAX is greater than the variable MULT_BITS. When the variable BITS_MAX is greater than the variable MULT_BITS, the parameter module 260 may proceed to operation 860b. When the variable BITS_MAX is less than or equal to the variable MULT_BITS, the parameter module 260 may proceed to operation 890b.

At operation 890b, the parameter module 260 may transmit the variable MULT and the variable RSHAMT to the post-processing module 270.

FIG. 8C is a flowchart of a method by which the processor 100 including the accelerator 110 determines the value of the softmax function, according to an embodiment of the disclosure.

At operation 810c, the softmax function processing module 130 may determine whether the sum of the exponential functions is equal to "0". When the sum of the exponential functions is "0" (YES at operation 810c), the softmax function processing module 130 may proceed to operation 820c, and when the sum of the exponential functions is not "0" (NO at operation 810c), the softmax function processing module 130 may proceed to operation 830c.

At operation 820c, the softmax function processing module 130 may modify the sum of the exponential functions. The softmax function processing module 130 may determine the sum of the exponential functions as the number of input values included in the input data. The softmax function processing module 130 may determine a value of a zero flag. The zero flag may be a flag indicating whether the sum of the exponential functions determined by the operation module 250 is "0". For example, when a value of the zero flag is "1", this may indicate that the sum of the exponential functions by the operation module 250 is "0".

At operation 830c, the softmax function processing module 130 may determine one or more parameters, based on the sum of the exponential functions. In an embodiment of the disclosure, operation 830c may correspond to operation 810a of FIG. 8A.

At operation 840c, the softmax function processing module 130 may determine whether the sum of the exponential functions by the operation module 250 is "0". For example, the softmax function processing module 130 may determine the value of the zero flag. When the sum of the exponential functions determined by the operation module 250 is "0", the softmax function processing module 130 may proceed to operation 850c, and otherwise, the softmax function processing module 130 may proceed to operation 860c.

At operation 850c, the softmax function processing module 130 may determine the value of the softmax function by setting the value of the exponential function to "1". The softmax function processing module 130 may set the value of the exponential function to "1" and determine the value of the softmax function, based on the one or more parameters. When the value of the zero flag is "1", the one or more parameters may be determined by setting the sum of the exponential functions to the number of input values included in the input data. For example, when the number of input data is 32, the parameter may be determined by setting the sum SUM to "1". The values of the softmax function for the input values may be determined to be the same as each other. For example, the input value may be set to "1" and the value of the softmax function for the input value may be determined to be "1/32". When the sum of the exponential functions is 0, this may mean that all the values of the exponential functions are small. Accordingly, the softmax function processing module 130 may obtain a value of a softmax function with a small error even when the values of the softmax function are determined to be the same as each other.

At operation 860c, the value of the softmax function may be determined based on the value of the exponential function, the scale factor, and the one or more parameters. In an embodiment of the disclosure, operation 860c may correspond to operation 820a of FIG. 8A.

The operation of the processor 100 including the accelerator 110 for processing the softmax function may not include one or more operations from among operations 810c to 860c, and some operations may be omitted or may be additionally included.

FIG. 9 is a flowchart of an operation in which the processor 100 including the accelerator 110 initializes settings, according to an embodiment of the disclosure.

At operation 910a, the processor 100 according to an embodiment of the disclosure may obtain setting data for input data. The setting data may be determined differently depending on the maximum quantization value and the range of the input data.

In an embodiment of the disclosure, the setting data may include setting data associated with at least one of exponential function information, a group index, a group shift unit, parameter representation bits, or a zero point value. In an embodiment of the disclosure, the setting data may be obtained from the memory outside the processor 100.

At operation 920a, the processor 100 according to an embodiment of the disclosure may initialize the settings of the accelerator 110, based on the setting data. In an embodiment of the disclosure, the processor 100 may initialize the settings of the accelerator 110, based on the settings data before performing an operation of determining the value of the softmax function for the input data.

In an embodiment of the disclosure, the processor 100 may set the group index, based on the setting data. The processor 100 may store the group index in the LUT module 230 of the accelerator 110. The group index may be a value associated with the number of groups into which the values of the exponential functions for the input data are divided. The accelerator 110 may determine at least one of the first bitstring or the scale factor, based on the set group index.

In an embodiment of the disclosure, the processor 100 may set the group shift unit, based on the setting data. The processor 100 may store the group shift unit in the LUT module 230 of the accelerator 110. The accelerator 110 may perform at least one of a shift operation on the reference value or an operation of determining the scale factor based on the set group shift unit.

In an embodiment of the disclosure, the processor 100 may set the parameter representation bits based on the setting data. The processor 100 may store the parameter representation bits in the parameter module 260 of the accelerator 110. The parameter representation bits may refer to the number of bits used to indicate the one or more parameters determined by the parameter module 260. The accelerator 110 may determine the one or more parameters, based on the set parameter representation bits.

In an embodiment of the disclosure, the processor 100 may set the zero point value, based on the setting data. The accelerator 110 may determine the sum of the exponential functions, based on the set zero point value.

In an embodiment of the disclosure, the processor 100 may control the LUT module to store the exponential function information, based on the setting data. The exponential function information may be determined differently depending on the maximum quantization value (or the quantization scale) of the input data, the maximum quantization value (or the quantization scale) of the value of the exponential function, or the zero point value.

The operation of the processor 100 including the accelerator 110 for processing the softmax function may not include one or more operations from among operations 910 and 920, and some operations may be omitted or may be additionally included.

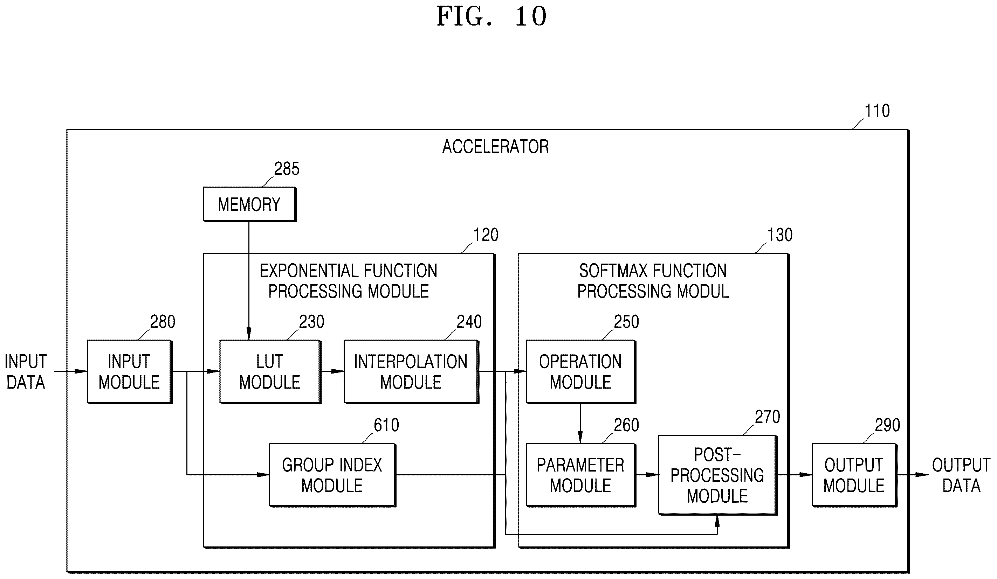

FIG. 10 is a block diagram illustrating the operation of the processor including the accelerator, according to an embodiment of the disclosure.

Referring to FIG. 10, the accelerator 110 may generate output data based on the input data. The input data may include a plurality of quantized input values. The output data may include a plurality of values of softmax functions corresponding to the input values of the input data. The value of the softmax function may be a quantized value.

The input module 280 may obtain the input data. The input module 280 may sequentially obtain the input values of the input data. The input module 280 may include a plurality of buffers.

The exponential function processing module 120 may obtain the input value from the input module 280. The exponential function processing module 120 may determine the scale factor and the value of the exponential function corresponding to the input value. The exponential function processing module 120 may sequentially obtain the input values of the input data and determine the scale factor and the value of the exponential function corresponding to the input value. The exponential function processing module 120 may transmit the scale factor and the value of the exponential function to the softmax function processing module 130.

The LUT module 230 may output at least one reference value corresponding to the input value. The LUT module 230 may store a plurality of values and may output a stored value corresponding to an index from among the plurality of values. The LUT module 230 may store exponential function information obtained from the outside of the accelerator 110 or from the memory 285. The exponential function information may include a plurality of values of exponential functions.

The LUT module 230 may output a first reference value that is a value of an exponential function corresponding to a first index (e.g., a table index) determined as upper bits of the input value. The LUT module 230 may transmit the first reference value to the interpolation module 240. The LUT module 230 may output a second reference value that is a value of an exponential function corresponding to a second index value that is one greater than the first index value. The LUT module 230 may transmit the second reference value to the interpolation module 240.

The interpolation module 240 may determine the value of the exponential function corresponding to the input value. The interpolation module 240 may determine the value of the exponential function corresponding to the input value, based on the first reference value and the second reference value. The interpolation module 240 may determine the value of the exponential function corresponding to the input value by performing interpolation on the first reference value and the second reference value, based on an interpolation weight determined by lower bits of the input value. In an embodiment of the disclosure, the interpolation module 240 may modify the second reference value, based on the order of the input values within the group, and determine the value of the exponential function, based on the modified second reference value.

The group index module 610 may determine the scale factor based on the input value. The group index module 610 may determine the scale factor based on the table index. The table index may include a first bitstring and a second bitstring. The table index may be split into the first bitstring and the second bitstring based on the group index. The group index module 610 may determine the scale factor based on the first bitstring. The group index module 610 may determine, as the scale factor, the result of performing a bitwise NOT operation on the first bitstring. The group index module 610 may determine the order of the input values within the group based on the second bitstring. In an embodiment of the disclosure, the group index module 610 may determine whether the input value is in the last order within the group, based on the result of performing a bitwise AND operation on the second bitstring.

The softmax function processing module 130 may determine the value of the softmax function for the input value based on the value of the exponential function and the scale factor. The softmax function processing module 130 may determine the sum of the exponential functions based on the value of the exponential function and the scale factor. The softmax function processing module 130 may determine the value of the softmax function based on the value of the exponential function, the scale factor, and the sum of the exponential functions. The softmax function processing module 130 may transmit the value of the softmax function to the output module 290.

In an embodiment of the disclosure, the softmax function processing module 130 may determine the value of the softmax function by dividing the value obtained by scaling the value of the exponential function using the scale factor by the sum of the exponential functions.

In an embodiment of the disclosure, the softmax function processing module 130 may determine one or more parameters based on the sum of the exponential functions. The softmax function processing module 130 may determine the value of the softmax function by performing an operation using the one or more parameters on the value obtained by scaling the value of the exponential function using the scale factor.

The operation module 250 may determine the sum of the exponential functions based on the value of the exponential function and the scale factor. The operation module 250 may determine the sum of the exponential functions by accumulating and summing the value obtained by scaling the value of the exponential function using the scale factor.

The operation module 250 may determine the sum of the exponential functions based on the base scale factor. The operation module 250 may scale at least one of the sum of the exponential functions or the value of the exponential function based on a result of comparing the base scale factor with the scale factor. For example, when the base scale factor is greater than the scale factor, the sum of the exponential functions may be scaled by the difference between the base scale factor and the scale factor. For example, when the base scale factor is less than the scale factor, the value of the exponential function may be scaled by the difference between the scale factor and the base scale factor. The operation module 250 may update the sum of the exponential functions by adding by adding the sum of the exponential functions to the value of the exponential function. The operation module 250 may determine the sum of the exponential functions by accumulating and adding the value of the exponential function. In an embodiment of the disclosure, the operation module 250 may transmit the sum of the exponential functions and the base scale factor to the parameter module 260.

The parameter module 260 may determine the one or more parameters based on the sum of the exponential functions. The parameter module 260 may determine the one or more parameters for approximating the reciprocal of the sum of the exponential functions. In an embodiment of the disclosure, the parameter module 260 may determine the one or more parameters by considering the result scaled by the base scale factor. The parameter module 260 may transmit, to the post-processing module 270, the one or more parameters determined by considering the base scale factor.

In an embodiment of the disclosure, the parameter module 260 may determine the one or more parameters and transmit the base scale factor and the one or more parameters to the post-processing module 270, without considering the result scaled by the base scale factor.

The post-processing module 270 may determine the value of the softmax function based on the value of the exponential function, the scale factor, and the one or more parameters. In an embodiment of the disclosure, the exponential function processing module 120 may re-determine the value of the exponential function and the scale factor and may transmit the value of the exponential function and the scale factor to the post-processing module 270. The exponential function processing module 120 may not store the value of the exponential function and the scale factor transmitted to the operation module 250, and may obtain the input values again from the input module 280, may determine the value of the exponential function and the scale factor, and may transmit the value of the exponential function and the scale factor to the post-processing module 270. In an embodiment of the disclosure, the exponential function processing module 120 may store, in the memory, the values transmitted to the operation module 250 and may transmit the stored values to the post-processing module 270.

The post-processing module 270 may determine the value of the softmax function by performing an operation using one or more parameters on the value obtained by scaling the value of the exponential function using the scale factor. The post-processing module 270 may transmit the value of the softmax function to the output module 290. The post-processing module 270 may perform scaling on the value of the exponential function using the base scale factor. For example, the value of the exponential function may be scaled using both the scale factor and the base scale factor.

The output module 290 may transmit output data to the outside of the accelerator 110 or to the memory 285. The output module 290 may sequentially transmit output values of the output data to the outside of the accelerator 110 or to the memory 285. The output data may include a plurality of output values. The output value may be the value of the softmax function for the input value. The output module 290 may include a plurality of buffers.

A plurality of modules included in the accelerator 110 may perform operations independently. Processes on a plurality of input values of input data through internal modules of the accelerator 110 may be performed in parallel. For example, an operation in which the exponential function processing module 120 determines the value of the exponential function for the first input value may be performed simultaneously with an operation in which the operation module 250 updates the sum of the exponential functions based on the value of the exponential function for the second input value.

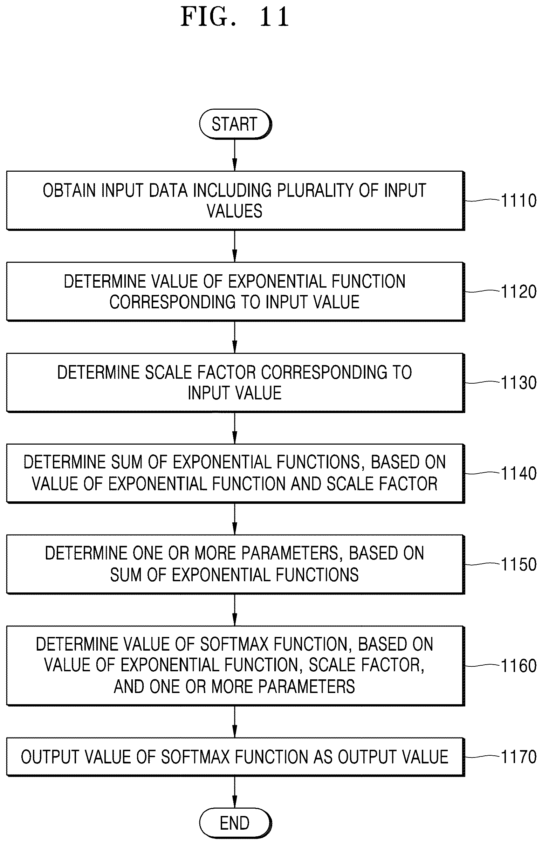

FIG. 11 is a flowchart of the operating method of the processor 100 according to input data, according to an embodiment of the disclosure.

At operation 1110, the processor 100 may obtain input data including a plurality of input values. The processor 100 may sequentially obtain the input values of the input data.

At operation 1120, the processor 100 may determine a value of an exponential function corresponding to the input value. The processor 100 may determine the value of the exponential function corresponding to the input value based on the value of the exponential function stored in the LUT module 230. The processor 100 may determine the value of the exponential function corresponding to the input value by performing interpolation on the values of exponential functions stored in the LUT module 230.

At operation 1130, the processor 100 may determine a scale factor corresponding to the input value. The processor 100 may determine the scale factor based on certain upper bits of the input value. Operations 1120 and 1130 may be performed independently. Operations 1120 and 1130 may be performed simultaneously, or operation 1130 may be performed prior to operation 1120.

At operation 1140, the processor 100 may determine the sum of the exponential functions based on the value of the exponential function and the scale factor. The processor 100 may scale the value of the exponential function or the sum of the exponential functions using the scale factor. The processor 100 may update the sum of the exponential functions by adding the value of the exponential function to the sum of the exponential functions obtained as the scaling result. The processor 100 may determine the sum of the exponential functions by accumulating and adding the exponential functions for the input values. In an embodiment of the disclosure, the processor 100 may determine the sum of the exponential functions based on the result of scaling the value of the exponential function or the sum of the exponential functions using the base scale factor.

At operation 1150, the processor 100 may determine one or more parameters based on the sum of the exponential functions. The one or more parameters may be parameters that are approximated to operate faster than a division operation on the sum of the exponential functions.

At operation 1160, the processor 100 may determine the value of the softmax function based on the value of the exponential function, the scale factor, and the one or more parameters. The processor 100 may determine the value of the exponential function and the scale factor again, separately from the value of the exponential function and the scale factor determined at operations 1120 and 1130. The processor 100 may determine the value of the softmax function by applying a parameter to the result of scaling the value of the exponential function using the scale factor.

At operation 1170, the processor 100 may output the value of the softmax function as an output value. The processor 100 may transmit the value of the softmax function to the memory or another processor or accelerator.

The operation of the processor 100 for processing the softmax function may not include one or more operations from among operations 1110 and 1170, and some operations may be omitted or may be additionally included.

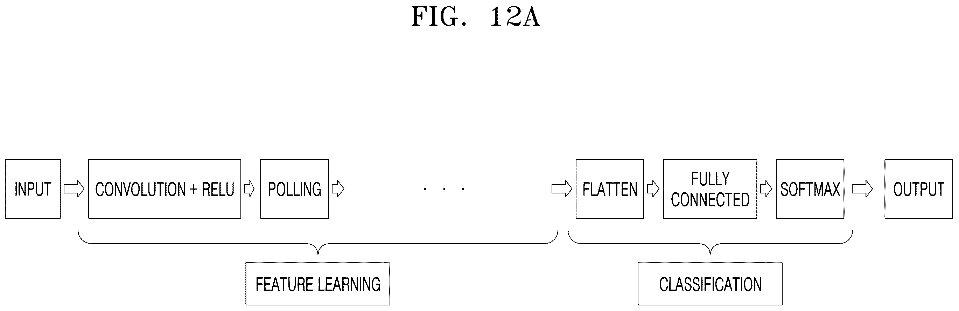

FIG. 12A is a diagram illustrating a process in which the processor 100 performs an AI operation, according to an embodiment of the disclosure.

Referring to FIG. 12A, an AI operation according to an embodiment of the disclosure may include a convolution operation, a rectified linear unit (ReLU) operation, a polling operation, a fully connected (FC) operation, and a softmax operation. An AI model having the structure illustrated in FIG. 12A may be referred to as a convolutional neural network (CNN) model. The CNN may be mainly used in the fields of image processing, such as object recognition.

The processor 100 may perform at least one of CNN operations using the accelerator 110. For example, the processor 100 may perform the convolution operation, the polling operation, the FC operation, and the softmax operation using the accelerator 110. The convolution operation, the polling operation, and the FC operation may only be implemented as sum, product, and shift operations. However, in order to directly perform the softmax operation, an exponential function operation and a division operation may be required. However, the processor 100 may process the softmax function using the exponential function processing module 120 and the softmax function processing module 130 of the accelerator 110. Accordingly, the electronic device may process both other AI operations and the softmax operation using the accelerator 110 of the processor 100.

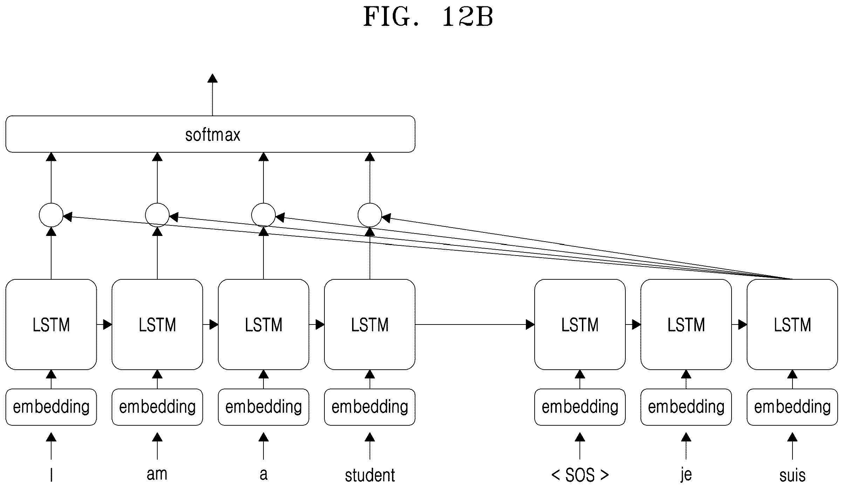

FIG. 12B is a diagram illustrating a process in which the processor 100 performs an AI operation, according to an embodiment of the disclosure.

Referring to FIG. 12B, an AI operation may include a long short-term memory (LSTM) model operation and a softmax operation according to an embodiment of the disclosure. An AI model having the structure illustrated in FIG. 12B may be mainly used in the field of natural language processing. For natural language processing, the electronic device may provide weights to data (e.g., embeddings corresponding to input words as shown in FIG. 12B) using a softmax function.

As illustrated in FIG. 12B, the processor 100 according to an embodiment of the disclosure may perform the softmax operation using the accelerator 110. The electronic device may process the softmax operation required for natural language processing using the accelerator 110 of the processor 100. Similarly, according to an embodiment of the disclosure, the processor 100 may be used to process softmax operations for generative AI or large language model (LLM).

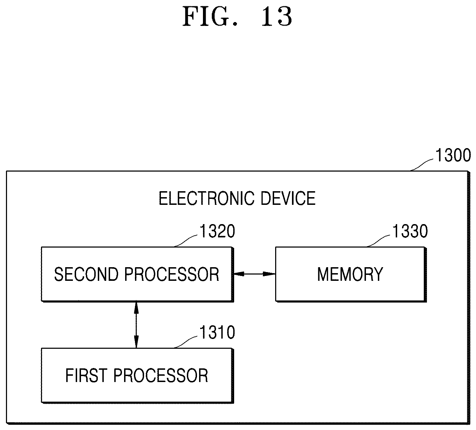

FIG. 13 is a block diagram illustrating an electronic device 1300 according to an embodiment of the disclosure.

Referring to FIG. 13, the electronic device 1300 may be a device that processes or is configured to process input information and performs a function corresponding to an input. For example, the electronic device 1300 may include an image display device, a mobile terminal, and a home appliance. For example, the electronic device 1300 may be at least one of a television (TV), a smartphone, a tablet, an air conditioner, a washing machine, or a vacuum cleaner. The electronic device 1300 according to an embodiment of the disclosure may include a first processor 1310, a second processor 1320, and a memory 1330. In an embodiment of the disclosure, the electronic device 1300 may further include a communication module and a display. The first processor 1310 may include one of the processor 100 of FIG. 1 and the processor 100 of FIG. 2, and some elements may be added to or removed from the processor 100.

In an embodiment of the disclosure, the second processor 1320 may control overall operations of the electronic device 1300. The second processor 1320 may control the operation of the electronic device 1300 by loading at least one instruction stored in the memory 1330. The second processor 1320 may perform various data processing or operations in order to control the communication module and the display. The second processor 1320 may include at least one of a CPU, an application processor (AP), or an image signal processor (ISP).

In an embodiment of the disclosure, the first processor 1310 may be a processor that processes or is configured to process an AI operation. For example, the processing speed of the AI operation of the first processor 1310 may be faster than the processing speed of the AI operation of the second processor 1320. The first processor 1310 may include at least one of a GPU or a neural processing unit (NPU).

In an embodiment of the disclosure, the first processor 1310 may train a neural network. The first processor 1310 may perform an operation of training a neural network based on input information. The first processor 1310 may perform repetitive training in a manner such as machine learning (ML).

In an embodiment of the disclosure, the first processor 1310 may analyze input data using the trained neural network. The first processor 1310 may allow the second processor 1320 to use the result of analyzing the input data. The second processor 1320 may implement AI using the analysis result of the first processor 1310.

In an embodiment of the disclosure, the communication module may allow the electronic device 1300 to establish a communication connection with an external electronic device or a server. The communication module may include at least one communication processor (CP) that supports wireless communication. The communication module may establish a wired or wireless communication channel between the electronic device 1300 and at least one of the external electronic device or the server. The communication module may transmit, to the second processor 1320, a signal notifying the establishment of the wired or wireless communication channel. The communication module may receive, from the second processor 1320, a signal allowing the establishment of the wired or wireless communication channel. The second processor 1320 may determine whether to permit the establishment of the wired or wireless communication channel based on the analysis result of the first processor 1310.

In an embodiment of the disclosure, the communication module may support the electronic device 1300 to transmit and receive signals or data to and from the external electronic device or the server using the established wired or wireless communication channel. For example, when the electronic device 1300 is an image display device, the communication module may establish the wired or wireless communication channel with the external electronic device or the server and may receive image data from the external electronic device or the server. For example, when the electronic device 1300 is a mobile terminal, the communication module may establish the wireless communication channel between the electronic device 1300 and the external electronic device and may connect a call or send and receive a message using the established wireless communication channel. For example, when the electronic device 1300 is a home appliance, the communication module may be connected to the external electronic device through short-range wireless communication such as Bluetooth Low Energy (BLE) communication and may be connected to the server through long-range wireless communication such as wireless fidelity (Wi-Fi) communication. The communication module may receive information for an AI operation from at least one of the external electronic device or the server or may transmit the result of the AI operation thereto.

In an embodiment of the disclosure, the memory 1330 may include at least one type of storage medium selected from flash memory-type memory, hard disk-type memory, multimedia card micro-type memory, card-type memory (e.g., secure digital (SD) or eXtreme digital (XD) memory), random access memory (RAM), static random access memory (SRAM), read-only memory (ROM), electrically erasable programmable read-only memory (EEPROM), programmable read-only memory (PROM), magnetic memory, magnetic disc, and optical disc. The memory 1330 may receive commands or data from the second processor 1320. The memory 1330 may store the commands or the data received from the second processor 1320. The commands or the data stored in the memory 1330 may include a program that causes the second processor 1320 to process input data and control the operation of the electronic device 1300. The second processor 1320 may load the commands or the data stored in the memory 1330. The second processor 1320 may analyze or process the commands or the data loaded from the memory 1330 using the first processor 1310.

In an embodiment of the disclosure, the display may provide visual information to the outside of the electronic device 1300. For example, the display may display a screen related to information about the state of the electronic device 1300. For example, the display may display a screen related to an operation or a function performed by the electronic device 1300. The second processor 1320 may transmit, to the display, image data related to the result of the AI operation of the first processor 1310. For example, the display may display image data including object information in an image generated by the first processor 1310. The display may include a display panel that displays a screen and a display driver integrated circuit (DDI) that drives the display panel. For example, the display may be at least one of an organic light-emitting display (OLED), a quantum dot (QD) display, or a micro light-emitting diode (LED) display.

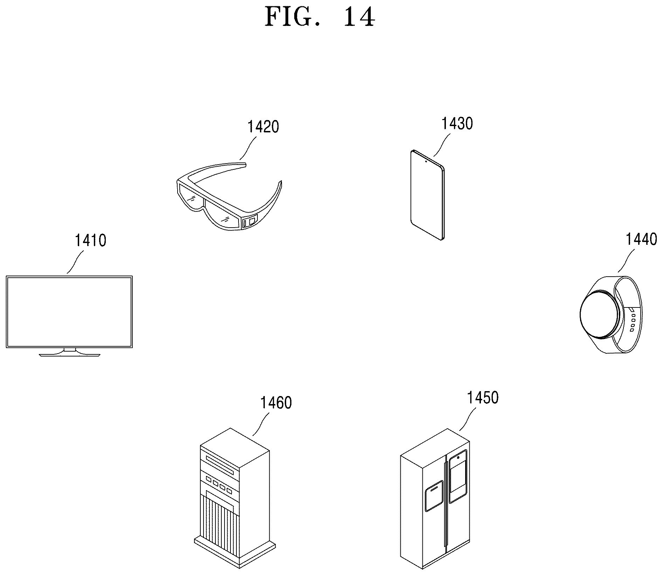

FIG. 14 is a diagram illustrating an electronic device including a processor, according to an embodiment of the disclosure.

Referring to FIG. 14, the electronic device including the processor according to an embodiment of the disclosure may include a plurality of electronic devices 1400, which may include, but is not limited to, a TV 1410, a head mounted display (HMD) 1420, a mobile device 1430 (e.g., a smartphone), a wearable device 1440, a home appliance 1450, and a server 1460. The plurality of electronic devices 1400 may each include the processor including the accelerator 110 for processing the softmax function.

The plurality of electronic devices 1400 each including the processor according to an embodiment of the disclosure may perform on-device image processing. For example, the plurality of electronic devices 1400 may perform image processing of recognizing an object included in an image using AI operations performed by the accelerator 110. In an embodiment of the disclosure, the processor 100 may obtain information about the image, perform AI image processing using the accelerator 110, and provide result information to another processor, display, or memory.

The plurality of electronic devices 1400 each including the processor according to an embodiment of the disclosure may perform on-device voice recognition. For example, the plurality of electronic devices 1400 may perform an operation of identifying a user's voice and a user command using AI operations performed by the accelerator 110. In an embodiment of the disclosure, the processor 100 may obtain voice information, perform AI voice recognition using the accelerator 110, and provide result information to another processor, display, speaker, or memory.

The plurality of electronic devices 1400 each including the processor 100 according to an embodiment of the disclosure may perform on-device natural language processing (e.g., translation). For example, the plurality of electronic devices 1400 may perform an operation of identifying the meaning and context of text or generating text using AI operations performed by the accelerator 110. In an embodiment of the disclosure, the processor 100 may obtain text information, perform AI natural language processing using the accelerator 110, and provide result information to another processor, speaker, display, or memory.

According to an embodiment of the disclosure, the server 1460 may use the processor 100 to process an AI operation on behalf of other electronic devices or perform procedures that require large-scale operations, such as large-scale language model processing.

The softmax operation may be processed quickly and accurately using the accelerator 110 according to an embodiment of the disclosure. Accordingly, the inference speed of the entire neural network may be increased (e.g., latency may be reduced). In addition, the accelerator 110 that processes the softmax function may be produced by adding a simple configuration of the processor 100 including the MAC accelerator 110. Therefore, a separate processor related to the softmax function is not required, and the softmax function and the MAC operation may be processed using only the processor 100. In this case, bandwidth and power consumption may be reduced by reducing data movement between the accelerator 110 and the separate processor.

According to an embodiment of the disclosure, method performed by at least one processor configured to implement an accelerator for processing a softmax function is provided. The method may include obtaining, by an exponential function processing module, input data comprising a plurality of input values. The method may include obtaining, by the exponential function processing module, a value of an exponential function corresponding to an input value included in the input data using a look-up table module. The method may include determining, by the exponential function processing module, a scale factor corresponding to the input value. The method may include determining, by a softmax function processing module, a value of a softmax function corresponding to the input value based on the value of the exponential function and the scale factor. Values associated with a plurality of exponential functions may be stored in the LUT module. The values associated with the plurality of exponential functions may be classified into a plurality of groups according to scale factors corresponding to the values.

According to an embodiment of the disclosure, the obtaining the value of the exponential function may include obtaining, by the exponential function processing module, a first reference value and a second reference value corresponding to the input value from among a plurality of values of exponential functions stored in the LUT module. The obtaining the value of the exponential function may include obtaining, by the exponential function processing module, the value of the exponential function based on the first reference value and the second reference value.

According to an embodiment of the disclosure, the obtaining the first reference value and the second reference value may include determining, by the exponential function processing module, a first index value and a second index value corresponding to the input value. The obtaining the first reference value and the second reference value may include obtaining, by the exponential function processing module, the first reference value based on a first output value of the LUT module corresponding to the first index value. The obtaining the first reference value and the second reference value may include obtaining, by the exponential function processing module, the second reference value based on a second output value of the LUT module corresponding to the second index value.

According to an embodiment of the disclosure, the determining the first index value and the second index value may include determining, by the exponential function processing module, the first index value from among index values stored in the LUT module based on the first index value being equal to at least a portion of the input value. The determining the first index value and the second index value may include determining, by the exponential function processing module, the second index value based on a proximity to the first index value.

According to an embodiment of the disclosure, the method may include identifying, by the exponential function processing module, group bits corresponding to the input data. The method may include obtaining, by the exponential function processing module, a first bitstring and a second bitstring from the input value, based on the group bits. The scale factor may be determined based on the first bitstring.

According to an embodiment of the disclosure, the determining the value of the exponential function may include determining, by the exponential function processing module, whether to adjust the second reference value, based on the second bitstring. The determining the value of the exponential function may include based on the exponential function processing module determining to adjust the second reference value: adjusting the second reference value, and determining the value of the exponential function based on the first reference value and the adjusted second reference value.

According to an embodiment of the disclosure, the value of the exponential function may be determined by performing interpolation on the first reference value and the adjusted second reference value based on the second bitstring.

According to an embodiment of the disclosure, the determining the value of the softmax function may include determining, by the softmax function processing module, a sum of exponential functions of the input data based on the value of the exponential function and the scale factor. The determining the value of the softmax function may include determining, by the softmax function processing module, the value of the softmax function corresponding to the input value based on the value of the exponential function, the scale factor, and the sum of the exponential functions.

According to an embodiment of the disclosure, the determining the sum of the exponential functions may include scaling, by the softmax function processing module, the value of the exponential function using the scale factor and a base scale factor. The determining the sum of the exponential functions may include determining, by the softmax function processing module, the sum of the exponential functions based on the scaled value of the exponential function.

According to an embodiment of the disclosure, the method may include determining, by the softmax function processing module, one or more parameters based on the sum of the exponential functions. The value of the softmax function may be determined by scaling the value of the exponential function based on the scale factor and the one or more parameters.

According to an embodiment of the disclosure, the method may include determining, by the softmax function processing module, a value of a flag indicating whether the sum of the exponential functions is zero ("0"). Based on the flag indicating that the sum of the exponential functions is zero ("0"), the one or more parameters may be determined by setting the sum of the exponential functions to a number of the plurality of input values included in the input data. The value of the softmax function may be determined by setting the value of the exponential function to one ("1").

According to an embodiment of the disclosure, a processor for processing a softmax function is provided. The processor may include an accelerator. The accelerator may include an exponential function processing module and a softmax function processing module. The exponential function processing module may be configured to obtain input data comprising a plurality of input values. The exponential function processing module may be configured to obtain a value of an exponential function corresponding to an input value included in the input data using a look-up table (LUT) module. The exponential function processing module may be configured to determine a scale factor corresponding to the input value. The softmax function processing module may be configured to determine a value of a softmax function corresponding to the input value based on the value of the exponential function and the scale factor. Values associated with a plurality of exponential functions may be stored in the LUT module. The values associated with the plurality of exponential functions may be classified into a plurality of groups according to scale factors corresponding to the values.

According to an embodiment of the disclosure, the exponential function processing module is further configured to obtain a first reference value and a second reference value corresponding to the input value from among a plurality of values of exponential functions stored in the LUT module. The exponential function processing module is further configured to obtain the value of the exponential function, based on the first reference value and the second reference value.

According to an embodiment of the disclosure, the exponential function processing module is further configured to determine a first index value and a second index value corresponding to the input value. the exponential function processing module is further configured to obtain the first reference value based on a first output value of the LUT module corresponding to the first index value. the exponential function processing module is further configured to obtain the second reference value based on a second output value of the LUT module corresponding to the second index value.

According to an embodiment of the disclosure, the exponential function processing module may be further configured to determine the first index value from among index values stored in the LUT module based on the first index value being equal to at least a portion of the input value. The exponential function processing module may be further configured to determine the second index value based on a proximity of the second index value to the first index value.

According to an embodiment of the disclosure, the exponential function processing module may be further configured to identify group bits corresponding to for the input data. The exponential function processing module may be further configured to obtain a first bitstring and a second bitstring from the input value, based on the group bits. The exponential function processing module may be further configured to determine the scale factor based on the first bitstring.

According to an embodiment of the disclosure, the exponential function processing module may be further configured to determine whether to adjust the second reference value, based on the second bitstring. The exponential function processing module may be further configured to based on determining to adjust the second reference value: adjust the second reference value, and determine the value of the exponential function based on the first reference value and the adjusted second reference value.

According to an embodiment of the disclosure, the value of the exponential function may be determined by performing interpolation on the first reference value and the adjusted second reference value, based on the second bitstring.

According to an embodiment of the disclosure, the softmax function processing module may be further configured to determine a sum of exponential functions of the input data based on the value of the exponential function and the scale factor. The softmax function processing module may be further configured to determine the value of the softmax function corresponding to the input value, based on the value of the exponential function, the scale factor, and the sum of the exponential functions.

According to an embodiment of the disclosure, an electronic device is provided. The electronic device may include a first processor configured to process a softmax function, a second processor, and a memory. The second processor may be configured to execute instructions included in the memory to control the first processor to process an artificial intelligence (AI) operation comprising the softmax function. The first processor may include an accelerator. The accelerator may be configured to implement an exponential function processing module and a softmax function processing module. The exponential function processing module may be configured to obtain input data including a plurality of input values. The exponential function processing module may be configured to obtain a value of an exponential function corresponding to an input value included in the input data using a look-up table (LUT) module. The exponential function processing module may be configured to determine a scale factor corresponding to the input value. The softmax function processing module may be configured to determine a value of a softmax function corresponding to the input value based on the value of the exponential function and the scale factor. Values associated with a plurality of exponential functions may be stored in the LUT module. The values associated with the plurality of exponential functions may be classified into a plurality of groups according to scale factors corresponding to the values.

According to an embodiment of the disclosure, the processor, the operating method of the processor, and the electronic device including the processor, according to the disclosure, may reduce the size and complexity of the processor or shorten the time required for operations by using the accelerator that processes the non-linear activation function. In addition, the processor, the operating method of the processor, and the electronic device including the processor, according to the disclosure, may implement a dynamic range by using a simpler method than a floating point method.

An embodiment of the disclosure may also be implemented in the form of a recording medium including instructions executable by a computer, such as a program module executed by a computer. A computer-readable recording medium may be any available media that are accessible by the computer and may include any volatile and non-volatile media and any removable and non-removable media. The computer-readable recording medium may include a computer storage medium and a communication medium. The computer storage medium may include any volatile, non-volatile, removable, and non-removable media that are implemented in any method or technology for storage of information, such as computer-readable instructions, data structures, program modules, or other data. The communication medium may typically include computer-readable instructions, data structures, or other data of a modulated data signal, such as program modules.

The computer-readable storage medium according to an embodiment of the disclosure may be provided in the form of a non-transitory storage medium. The "non-transitory storage medium" is a tangible device and only means not including a signal (e.g., electromagnetic waves). This term does not distinguish between a case where data is semi-permanently stored in a storage medium and a case where data is temporarily stored in a storage medium. For example, the non-transitory storage medium may include a buffer in which data is temporarily stored.

The method according to an embodiment of the disclosure may be provided by being included in a computer program product. The computer program product may be traded between a seller and a buyer as commodities. The computer program product may be distributed in the form of a machine-readable storage medium (e.g., compact disc read-only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or a memory of a relay server, or may be temporarily generated.

The foregoing description of the disclosure is for illustrative purposes only, and those of ordinary skill in the art to which the disclosure pertains will understand that modifications into other specific forms may be made thereto without changing the technical spirit or essential features of the disclosure. Therefore, it should be understood that the embodiments described above are illustrative in all aspects and are not restrictive. For example, the components described as being singular may be implemented in a distributed manner. Similarly, the components described as being distributed may be implemented in a combined form.

The scope of the disclosure is defined by the appended claims rather than the above detailed description, and all changes or modifications derived from the meaning and scope of the claims and equivalent concepts thereof should be construed as falling within the scope of the disclosure.

**Claims**

1. A method performed by at least one processor configured to implement an accelerator for processing a softmax function, the method comprising:

   obtaining, by an exponential function processing module, input data comprising a plurality of input values (310);
   obtaining, by the exponential function processing module, a value of an exponential function corresponding to an input value included in the input data using a look-up table (LUT) module (320);

determining, by the exponential function processing module, a scale factor corresponding to the input value (330); and

determining, by a softmax function processing module, a value of a softmax function corresponding to the input value based on the value of the exponential function and the scale factor (340),

wherein values associated with a plurality of exponential functions are stored in the LUT module, and

wherein the values associated with the plurality of exponential functions are classified into a plurality of groups according to scale factors corresponding to the values.

2. The method of claim 1, wherein the obtaining the value of the exponential function comprises:

obtaining, by the exponential function processing module, a first reference value and a second reference value corresponding to the input value from among a plurality of values of exponential functions stored in the LUT module; and

obtaining, by the exponential function processing module, the value of the exponential function based on the first reference value and the second reference value.

3. The method of claim 2, wherein the obtaining the first reference value and the second reference value comprises:

determining, by the exponential function processing module, a first index value and a second index value corresponding to the input value;

obtaining, by the exponential function processing module, the first reference value based on a first output value of the LUT module corresponding to the first index value; and

obtaining, by the exponential function processing module, the second reference value based on a second output value of the LUT module corresponding to the second index value.

4. The method of claim 3, wherein the determining the first index value and the second index value comprises:

determining, by the exponential function processing module, the first index value from among index values stored in the LUT module based on the first index value being equal to at least a portion of the input value; and

determining, by the exponential function processing module, the second index value based on a proximity to the first index value.

5. The method of any one of claims 1 to 4, further comprising:

identifying, by the exponential function processing module, group bits corresponding to the input data; and

obtaining, by the exponential function processing module, a first bitstring and a second bitstring from the input value, based on the group bits,

wherein the scale factor is determined based on the first bitstring.

6. The method of claim 5, wherein the determining the value of the exponential function comprises:

determining, by the exponential function processing module, whether to adjust the second reference value, based on the second bitstring; and

based on the exponential function processing module determining to adjust the second reference value:

adjusting the second reference value; and

determining the value of the exponential function based on the first reference value and the adjusted second reference value.

7. The method of claim 6, wherein the value of the exponential function is determined by performing interpolation on the first reference value and the adjusted second reference value based on the second bitstring.

8. The method of any one of claims 1 to 7, wherein the determining the value of the softmax function comprises:

determining, by the softmax function processing module, a sum of exponential functions of the input data based on the value of the exponential function and the scale factor; and

determining, by the softmax function processing module, the value of the softmax function corresponding to the input value based on the value of the exponential function, the scale factor, and the sum of the exponential functions.

9. The method of claim 8, wherein the determining the sum of the exponential functions comprises:

scaling, by the softmax function processing module, the value of the exponential function using the scale factor and a base scale factor; and
determining, by the softmax function processing module, the sum of the exponential functions based on the scaled value of the exponential function.

10. The method of any one of claims 8 to 9, further comprising determining, by the softmax function processing module, one or more parameters based on the sum of the exponential functions,
wherein the value of the softmax function is determined by scaling the value of the exponential function based on the scale factor and the one or more parameters.

11. The method of claim 10, further comprising determining, by the softmax function processing module, a value of a flag indicating whether the sum of the exponential functions is zero ("0"),
wherein, based on the flag indicating that the sum of the exponential functions is zero ("0"), the one or more parameters are determined by setting the sum of the exponential functions to a number of the plurality of input values included in the input data, and the value of the softmax function is determined by setting the value of the exponential function to one ("1").

12. A processor for processing a softmax function, the processor comprising:

an accelerator (110), wherein the accelerator comprises an exponential function processing module (120) and a softmax function processing module (130),
wherein the exponential function processing module (120) is configured to:

obtain input data comprising a plurality of input values;
obtain a value of an exponential function corresponding to an input value included in the input data using a look-up table (LUT) module; and
determine a scale factor corresponding to the input value,

wherein the softmax function processing module (130) is configured to determine a value of a softmax function corresponding to the input value based on the value of the exponential function and the scale factor, and
wherein values associated with a plurality of exponential functions are stored in the LUT module, and the values associated with the plurality of exponential functions are classified into a plurality of groups according to scale factors corresponding to the values.

13. The processor of claim 12, wherein the exponential function processing module is further configured to:

obtain a first reference value and a second reference value corresponding to the input value from among a plurality of values of exponential functions stored in the LUT module; and
obtain the value of the exponential function, based on the first reference value and the second reference value.

14. The processor of claim 13, wherein the exponential function processing module is further configured to:

determine a first index value and a second index value corresponding to the input value;
obtain the first reference value based on a first output value of the LUT module corresponding to the first index value; and
obtain the second reference value based on a second output value of the LUT module corresponding to the second index value.

15. An electronic device (1300) comprising:

a first processor (1310) configured to process a softmax function;
a second processor (1320); and
a memory (1330),
wherein the second processor (1320) is configured to execute instructions included in the memory (1330) to control the first processor (1310) to process an artificial intelligence (AI) operation comprising the softmax function,

wherein the first processor (1310) comprises an accelerator (110),

wherein the accelerator is configured to implement an exponential function processing module (120) and a softmax function processing module (130),

wherein the exponential function processing module (120) is configured to:

obtain input data including a plurality of input values;

obtain a value of an exponential function corresponding to an input value included in the input data using a look-up table (LUT) module; and

determine a scale factor corresponding to the input value,

wherein the softmax function processing module (130) is configured to determine a value of a softmax function corresponding to the input value based on the value of the exponential function and the scale factor, and

wherein values associated with a plurality of exponential functions are stored in the LUT module, and

wherein the values associated with the plurality of exponential functions are classified into a plurality of groups according to scale factors corresponding to the values.

# FIG. 1

PROCESSOR — 100

ACCELERATOR — 110

EXPONENTIAL FUNCTION PROCESSING MODULE — 120

SOFTMAX FUNCTION PROCESSING MODULE — 130

# FIG. 2

PROCESSOR — 100

210
CONTROL MODULE

215
DMA MODULE

220
DSP MODULE

110
ACCELERATOR

120

230
LUT MODULE

240
INTERPOLATION MODULE

130

250
OPERATION MODULE

280
INPUT MODULE

260
PARAMETER MODULE

285
MEMORY

270
POST-PROCESSING MODULE

290
OUTPUT MODULE

# FIG. 3

START

OBTAIN INPUT DATA INCLUDING PLURALITY OF INPUT VALUES — 310

OBTAIN VALUE OF EXPONENTIAL FUNCTION CORRESPONDING TO INPUT VALUE OF INPUT DATA BY USING LUT MODULE — 320

DETERMINE SCALE FACTOR CORRESPONDING TO INPUT VALUE — 330

DETERMINE VALUE OF SOFTMAX FUNCTION FOR INPUT VALUE OUTPUT VALUE, BASED ON VALUE OF EXPONENTIAL FUNCTION AND SCALE FACTOR — 340

END

# FIG. 4A

FIG. 4B

410b

Quantized EXP

$E_m$

$E_{m}-1$

1

$e_{min}$
$e_{min}+scale\_EXP$
$e_{min}+2*scale\_EXP$
$e_{max}-2*scale\_EXP$
$e_{max}-scale\_EXP$
$e_{max}$  EXP

$e_{min} = \exp(x_{min})$
$e_{max} = \exp(x_{max})$
EXP: exponential value

420b

Quantized EXP

$E_m+ZP$

$E_{m}-1+ZP$

$1+ZP$

$ZP$

$e_{min}$
$e_{min}+scale\_EXP$
$e_{min}+2*scale\_EXP$
$e_{max}-2*scale\_EXP$
$e_{max}-scale\_EXP$
$e_{max}$  EXP

$e_{min} = \exp(x_{min})$
$e_{max} = \exp(x_{max})$
EXP: exponential value

EP 4 682 765 A1

FIG. 4C

410c

EXP

$\exp(x_{max})$

$\exp(x_{min})$

$y = e^{x}$

QUANTIZATION

$X_{min}$ $X_{max}$ input

420c

Quantized EXP

$E_{Qmax}$

$E_{Qmax-1}$

$E_1$
$E_0$

1 $Q_{max}-1$ Quantized input
$Q_{max}$

EP 4 682 765 A1

FIG. 5A

ORIGINAL DATA

| Group | | | | | | | | | | | | | | | |
|---|---|---|---|---|---|---|---|---|---|---|---|---|---|---|---|
| Group #0 | 0001 | 0002 | 0002 | 0003 | 0004 | 0005 | 0006 | 0006 | 0007 | 0008 | 0009 | 000A | 000B | 000C | 000D | 000E |
| | 000F | 0010 | 0012 | 0013 | 0014 | 0015 | 0017 | 0018 | 001A | 001B | 001D | 001E | 0020 | 0021 | 0023 | 0025 |
| Group #1 | 0027 | 0029 | 002B | 002D | 002F | 0031 | 0033 | 0035 | 0038 | 003A | 003D | 003F | 0042 | 0045 | 0048 | 004B |
| | 004E | 0051 | 0054 | 0057 | 005B | 005E | 0062 | 0066 | 006A | 006E | 0072 | 0076 | 007A | 007F | 0084 | 0088 |
| Group #2 | 008D | 0093 | 0098 | 009D | 00A3 | 00A9 | 00AF | 00B5 | 00BC | 00C2 | 00C9 | 00D0 | 00D7 | 00DF | 00E7 | 00EF |
| | 00F7 | 00FF | 0108 | 0111 | 011B | 0124 | 012E | 0138 | 0143 | 014E | 0159 | 0165 | 0171 | 017D | 018A | 0197 |
| Group #3 | 01A5 | 01B3 | 01C1 | 01D0 | 01DF | 01EF | 0200 | 0211 | 0222 | 0234 | 0247 | 025A | 026E | 0282 | 0297 | 02AD |
| | 02C3 | 02DA | 02F2 | 030B | 0324 | 033E | 0359 | 0375 | 0392 | 03B0 | 03CE | 03EE | 040E | 0430 | 0453 | 0477 |
| Group #4 | 049C | 04C2 | 04E9 | 0512 | 053B | 0567 | 0593 | 05C1 | 05F1 | 0621 | 0654 | 0688 | 06BE | 06F5 | 072E | 076A |
| | 07A6 | 07E5 | 0826 | 0869 | 08AE | 08F5 | 093F | 098A | 09D9 | 0A29 | 0A7D | 0AD2 | 0B2B | 0B86 | 0BE5 | 0C46 |
| Group #5 | 0CAB | 0D12 | 0D7D | 0DEB | 0E5D | 0ED2 | 0F4C | 0FC9 | 104A | 10CF | 1158 | 11E5 | 1277 | 130E | 13AA | 144A |
| | 14F0 | 159B | 164B | 1701 | 17BC | 187E | 1945 | 1A14 | 1AE8 | 1BC3 | 1CA6 | 1D8F | 1E80 | 1F79 | 2079 | 2182 |
| Group #6 | 2292 | 23AC | 24CF | 25FA | 2730 | 286F | 29B8 | 2B0C | 2C6A | 2DD4 | 2F49 | 30CA | 3257 | 22F1 | 3598 | 374C |
| | 390E | 3ADE | 3CBD | 3EAB | 40A9 | 42B8 | 44D6 | 4707 | 4948 | 4B9D | 4E04 | 507E | 530D | 55B1 | 586A | 5B39 |
| Group #7 | 5E1F | 611D | 6432 | 6761 | 6AAA | 6E0E | 718D | 7528 | 78E1 | 7CB8 | 80AE | 84C4 | 88FC | 8D56 | 91D3 | 9675 |
| | 9B3C | A02A | A541 | AA80 | AFEA | B581 | BB44 | C137 | C75A | CDAE | D437 | DAF4 | E1E8 | E914 | F07B | F81E |

SCALING

(A)

EP 4 682 765 A1

# FIG. 5B

(A)

↓ SCALING

SCALED DATA

| Group | | | | | | | | | | | | | | | | | |
|---|---|---|---|---|---|---|---|---|---|---|---|---|---|---|---|---|---|
| Group #0 | 007E | 00D8 | 0134 | 0193 | 01F5 | 025A | 02C3 | 032E | 039E | 0410 | 0487 | 0501 | 057F | 0601 | 0687 | 0711 | 7 |
| | 07A0 | 0833 | 08CB | 0968 | 0A0A | 0AB1 | 0B5D | 0C0F | 0CC6 | 0D83 | 0E46 | 0F0F | 0FDF | 10B5 | 1193 | 1277 | |
| Group #1 | 09B1 | 0A2A | 0AA8 | 0B29 | 0BAE | 0C38 | 0CC6 | 0D58 | 0DF0 | 0E8B | 0F2C | 0FD2 | 107D | 112E | 11E4 | 12A1 | 6 |
| | 1363 | 142B | 14F9 | 15CE | 16AA | 178D | 1877 | 1969 | 1A62 | 1B63 | 1C6C | 1D7E | 1E98 | 1FBB | 20E8 | 221E | |
| Group #2 | 11AF | 1254 | 12FE | 13AE | 1463 | 151E | 15DF | 16A6 | 1774 | 1848 | 1922 | 1A04 | 1AED | 1BDD | 1CD4 | 1DD4 | 5 |
| | 1EDC | 1FEC | 2105 | 2226 | 2351 | 2485 | 25C4 | 270C | 285E | 29BC | 2B24 | 2C98 | 2E18 | 2FA4 | 313C | 32E2 | |
| Group #3 | 1A4A | 1B2B | 1C12 | 1D01 | 1DF7 | 1EF5 | 1EFC | 210A | 2221 | 2341 | 246B | 259D | 26DA | 2820 | 2971 | 2ACC | 4 |
| | 2C33 | 2DA4 | 2F22 | 30AC | 3242 | 33E5 | 3595 | 3753 | 3920 | 3AFB | 3CE5 | 3EDE | 40E8 | 4302 | 452D | 476A | |
| Group #4 | 24DC | 260D | 2748 | 288C | 29DB | 2B35 | 2C99 | 2E09 | 2F84 | 310C | 32A0 | 3441 | 35EF | 37AA | 3974 | 3B4C | 3 |
| | 3D33 | 3F2A | 4131 | 4348 | 4570 | 47A9 | 49F5 | 4C53 | 4EC5 | 514A | 53E4 | 5694 | 5958 | 5C34 | 5F26 | 6231 | |
| Group #5 | 32AA | 3449 | 35F4 | 37AD | 3974 | 3B4A | 3D2E | 3F22 | 4126 | 433A | 455F | 4796 | 49DE | 4C39 | 4EA7 | 5129 | 2 |
| | 53BF | 566A | 592B | 5C02 | 5EF1 | 61F7 | 6516 | 684E | 6BA0 | 6F0E | 7297 | 763D | 7A00 | 7DE2 | 81E4 | 8606 | |
| Group #6 | 4525 | 4758 | 499D | 4BF5 | 4E60 | 50DE | 5370 | 5618 | 58D5 | 5BA8 | 5E92 | 6194 | 64AE | 67E2 | 6B2F | 6E98 | 1 |
| | 721C | 75BC | 797A | 7D57 | 8153 | 856F | 89AD | 8E0D | 9291 | 9739 | 9C07 | A0FD | A61A | AB62 | B0D4 | B672 | |
| Group #7 | 5E1F | 611D | 6432 | 6761 | 6AAA | 6E0E | 718D | 7528 | 78E1 | 7CB8 | 80AE | 84C4 | 88FC | 8D56 | 91D3 | 9675 | 0 |
| | 9B3C | A02A | A541 | AA80 | AFEA | B581 | BB44 | C137 | C75A | CDAE | D437 | DAF4 | E1E8 | E914 | F07B | F81E | |

EP 4 682 765 A1

FIG. 6

# FIG. 7A

START

DETERMINE SUM OF EXPONENTIAL FUNCTIONS OF INPUT DATA —— 710a

DETERMINE VALUE OF SOFTMAX FUNCTION, BASED ON VALUE OF EXPONENTIAL FUNCTION, SCALE FACTOR, AND SUM OF EXPONENTIAL FUNCTIONS —— 720a

END

# FIG. 7B

START

SUM := 0
BASE_EXPONENT := RSHAMT_MAX
— 710b

END_OF_INPUT — 720b

YES

NO

END

VALUE := _VALUE
EXPONENT := _EXPONENT
— 730b

EXPONENT < BASE_EXPONENT — 740b

NO

YES

SUM := SHRR(SUM,
BASE_EXPONENT−EXPONENT)
BASE_EXPONENT := EXPONENT
— 750b

VALUE := SHRR(VALUE,
EXPONENT−BASE_EXPONENT)
BASE_EXPONENT := EXPONENT
— 760b

SUM := SUM + VALUE — 770b

# FIG. 8A

START

DETERMINE ONE OR MORE PARAMETERS, BASED ON
SUM OF EXPONENTIAL FUNCTIONS — 810a

DETERMINE VALUE OF SOFTMAX FUNCTION, BASED ON
VALUE OF EXPONENTIAL FUNCTION, SCALE FACTOR,
AND ONE OR MORE PARAMETERS — 820a

END

FIG. 8B

```
                    ( START )
                        |
                        v
        +-----------------------------------+  810b
        | DIVIDEND := QMAX                  |
        | DIVISOR := SUM                    |
        | RSHAMT := 0                       |
        +-----------------------------------+
                        |
                        v
              < DIVISOR > DIVIDEND >---- NO -------------------------------+
                        |  820b                                           |
                       YES                                                |
                        |                                                 v
        +-----------------------------------+  830b      +-----------------------------------+  840b
        | DIVIDEND := DIVIEND << 1          |            | DIVISOR := DIVISOR << 1           |
        | RSHAMT := RSHAMT + 1              |            | RSHAMT := RSHAMT - 1              |
        +-----------------------------------+            +-----------------------------------+
                        |                                                 |
   YES                  v                                                 v                    YES
    +------< DIVISOR > DIVIDEND >              < DIVISOR <= DIVIDEND >------+
    |                   |  832b                          |  842b
    |                  NO                               NO
    |                   |                                |
    |                   |          +-----------------------------------+  844b
    |                   |          | DIVISOR := DIVISOR >> 1           |
    |                   |          | RSHAMT := RSHAMT + 1              |
    |                   |          +-----------------------------------+
    |                   v                    |
    |   +-----------------------------------+<----+
    |   | DIVIDEND := DIVIDEND - DIVISOR    |  850b
    |   | MULT := 1                         |
    |   | MULT_BITS := 1                    |
    |   +-----------------------------------+
    |                   |
    |                   v
    |         < DIVISOR > DIVIDEND >---- NO -------------------------+
    |                   |  860b                                      |
    |                  YES                                           |
    |                   |                                            v
    |   +-----------------------------------+  870b    +-----------------------------------+  875b
    |   | DIVIDEND := DIVIEND << 1          |          | DIVIDEND := DIVIDEND - DIVISOR    |
    |   | MULT := MULT << 1                 |          | MULT := MULT + 1                  |
    |   | MULT_BITS := MULT_BITS + 1        |          +-----------------------------------+
    |   | RSHAMT := RSHAMT + 1              |                        |
    |   +-----------------------------------+                        |
    |                   |                                            |
    |                   v<------------------------------------------+
    |   YES   < MULT_BITS < BITS_MAX >
    +--------         |  880b
                     NO
                      |
                      v
        +-----------------------------------+  890b
        | RETURN MULT, RSHAMT               |
        +-----------------------------------+
                      |
                      v
                  ( END )
```

# FIG. 8C

START

SUM OF
EXPONENTIAL FUNCTIONS
== 0 ?  ⎯810c

YES →

NO ↓

DETERMINE ONE OR MORE
PARAMETERS, BASED ON SUM OF
EXPONENTIAL FUNCTIONS  ⎯830c

MODIFY SUM OF EXPONENTIAL
FUNCTIONS AND DETERMINE
VALUE OF ZERO FLAG  ⎯820c

ZERO FLAG == 1?
(SUM OF EXPONENTIAL
FUNCTIONS BEFORE MODIFICATION
== 0?)  ⎯840c

YES →

NO ↓

DETERMINE VALUE OF SOFTMAX
FUNCTION, BASED ON VALUE OF
EXPONENTIAL FUNCTION, SCALE FACTOR,
AND ONE OR MORE PARAMETERS  ⎯860c

DETERMINE VALUE OF SOFTMAX
FUNCTION, BASED ON VALUE OF
EXPONENTIAL FUNCTION SET TO 1
AND ONE OR MORE PARAMETERS  ⎯850c

END

# FIG. 9

START

OBTAIN SETTING DATA FOR INPUT DATA —910a

INITIALIZE SETTINGS OF ACCELERATOR,
BASED ON SETTING DATA —920a

END

# FIG. 10

# FIG. 11

START

OBTAIN INPUT DATA INCLUDING PLURALITY OF INPUT VALUES ~1110

DETERMINE VALUE OF EXPONENTIAL FUNCTION CORRESPONDING TO INPUT VALUE ~1120

DETERMINE SCALE FACTOR CORRESPONDING TO INPUT VALUE ~1130

DETERMINE SUM OF EXPONENTIAL FUNCTIONS, BASED ON VALUE OF EXPONENTIAL FUNCTION AND SCALE FACTOR ~1140

DETERMINE ONE OR MORE PARAMETERS, BASED ON SUM OF EXPONENTIAL FUNCTIONS ~1150

DETERMINE VALUE OF SOFTMAX FUNCTION, BASED ON VALUE OF EXPONENTIAL FUNCTION, SCALE FACTOR, AND ONE OR MORE PARAMETERS ~1160

OUTPUT VALUE OF SOFTMAX FUNCTION AS OUTPUT VALUE ~1170

END

# FIG. 12A

INPUT ⇨ CONVOLUTION + RELU ⇨ POLLING ⇨ · · · ⇨ FLATTEN ⇨ FULLY CONNECTED ⇨ SOFTMAX ⇨ OUTPUT

FEATURE LEARNING

CLASSIFICATION

FIG. 12B

FIG. 13

FIG. 14

## INTERNATIONAL SEARCH REPORT

| International application No. |
| --- |
| **PCT/KR2024/009315** |

**A.    CLASSIFICATION OF SUBJECT MATTER**

**G06N 3/048**(2023.01)i; **G06F 7/556**(2006.01)i

According to International Patent Classification (IPC) or to both national classification and IPC

**B.    FIELDS SEARCHED**

Minimum documentation searched (classification system followed by classification symbols)

G06N 3/048(2023.01); G06F 1/03(2006.01); G06F 16/22(2019.01); G06F 16/2455(2019.01); G06F 17/11(2006.01); G06F 17/18(2006.01); G06F 30/331(2020.01); G06F 7/499(2006.01); G06N 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 소프트맥스(softmax), 룩업 테이블(lookup table), 지수 함수(exponential function), 스케일 팩터(scale factor), 그룹(group), 인덱스(index)

**C.    DOCUMENTS CONSIDERED TO BE RELEVANT**

| Category* | Citation of document, with indication, where appropriate, of the relevant passages | Relevant to claim No. |
| --- | --- | --- |
| X | US 2022-0383077 A1 (APTIV TECHNOLOGIES LIMITED) 01 December 2022 (2022-12-01)<br>See paragraphs [0008]-[0011], [0047]-[0048], [0064], [0083]-[0084] and [0089]-[0091]; and figures 3A-3B. | 1,12,15 |
| Y |  | 2-4,8-11,13-14 |
| A |  | 5-7 |
| Y | VASYITSOV, Ihor et al. Efficient Softmax Approximation for Deep Neural Networks with Attention Mechanism. arXiv:2111.10770v1. November 2021. [Retrieved on 19 September 2024]. Retrieved from <https://arxiv.org/pdf/2111.10770v1>.<br>See pages 5-6; and figure 1. | 2-4,13-14 |
| Y | KR 10-2381770 B1 (GSI TECHNOLOGY INC.) 31 March 2022 (2022-03-31)<br>See paragraphs [0067]-[0070]. | 8-11 |
| A | US 2023-0106651 A1 (MICROSOFT TECHNOLOGY LICENSING, LLC) 06 April 2023 (2023-04-06)<br>See paragraphs [0057]-[0058] and [0068]-[0069]. | 1-15 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 October 2024** | **08 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/009315**

| C. | DOCUMENTS CONSIDERED TO BE RELEVANT | |
|---|---|---|
| Category* | Citation of document, with indication, where appropriate, of the relevant passages | Relevant to claim No. |
| A | US 2021-0294784 A1 (SAMSUNG ELECTRONICS CO., LTD.) 23 September 2021 (2021-09-23) See claims 1 and 4-5. | 1-15 |

Form PCT/ISA/210 (second sheet) (July 2022)

**INTERNATIONAL SEARCH REPORT**
Information on patent family members

International application No.

**PCT/KR2024/009315**

| Patent document cited in search report | | | Publication date (day/month/year) | Patent family member(s) | | | Publication date (day/month/year) |
|---|---|---|---|---|---|---|---|
| US | 2022-0383077 | A1 | 01 December 2022 | CN | 115374902 | A | 22 November 2022 |
| | | | | EP | 4092578 | A1 | 23 November 2022 |
| KR | 10-2381770 | B1 | 31 March 2022 | CN | 109669962 | A | 23 April 2019 |
| | | | | CN | 109669962 | B | 19 July 2022 |
| | | | | US | 10949766 | B2 | 16 March 2021 |
| | | | | US | 2019-0114555 | A1 | 18 April 2019 |
| US | 2023-0106651 | A1 | 06 April 2023 | CN | 117897688 | A | 16 April 2024 |
| | | | | EP | 4409393 | A1 | 07 August 2024 |
| | | | | TW | 202314570 | A | 01 April 2023 |
| | | | | WO | 2023-055479 | A1 | 06 April 2023 |
| US | 2021-0294784 | A1 | 23 September 2021 | CN | 113407747 | A | 17 September 2021 |
| | | | | EP | 3882823 | A1 | 22 September 2021 |
| | | | | KR | 10-2021-0116182 | A | 27 September 2021 |

Form PCT/ISA/210 (patent family annex) (July 2022)